# EUROPÄISCHE PATENTSCHRIFT

(11) **EP 4 596 225 B1**
(45) Veröffentlichungstag und Bekanntmachung des Hinweises auf die Patenterteilung: **11.11.2026**
(21) Anmeldenummer: 24155096.1
(22) Anmeldetag: 31.01.2024
(51) Int. Cl.: B29D 22/00, A47C 27/08, B29C 65/02, B29C 65/00, B63C 9/15, B29D 22/02, B29L 22/02, B63C 9/00, B29L 31/52

(54) **VERFAHREN ZUR HERSTELLUNG EINES SCHWIMMKÖRPERS MIT EINEM VERSCHLIESSBAREN AUFNAHMEVOLUMEN UND SCHWIMMKÖRPER**
METHOD FOR PRODUCING A FLOATING BODY HAVING A CLOSABLE RECEPTACLE VOLUME AND FLOATING BODY
PROCÉDÉ DE FABRICATION D'UN CORPS FLOTTANT COMPRENANT UN VOLUME DE RÉCEPTION POUVANT ÊTRE FERMÉ ET CORPS FLOTTANT

(43) Veröffentlichungstag der Anmeldung: 06.08.2025
(73) Patentinhaber: Bernhardt Apparatebau GmbH u. Co., 25488 Holm (DE)
(72) Erfinder: BERGE, Guido, 22880 Wedel (DE)
(74) Vertreter: Bird & Bird LLP - Hamburg

(56) Entgegenhaltungen:
- DE-A1- 102012 003 969
- GB-A- 2 583 886
- US-A1- 2014 243 124
- US-A1- 2021 129 957

## Beschreibung

Die vorliegende Erfindung betrifft ein Verfahren zur Herstellung eines Schwimmkörpers mit einem verschließbaren Aufnahmevolumen und einen Schwimmkörper mit einem verschließbaren Aufnahmevolumen.

Aus dem Stand der Technik sind Schwimmkörper in Form von aufblasbaren Körpern bekannt. Die bekannten aufblasbaren Körper, die normalerweise aus einer ersten Außenlage und einer zweiten Außenlage aus flächigem Material bestehen, sind weit verbreitet und finden Anwendung in Produkten wie aufblasbaren Rettungswesten oder Luftmatratzen. Die beiden Außenlagen werden normalerweise miteinander entlang einer umlaufenden Naht verbunden, und der aufblasbare Körper kann über ein Ventil befüllt und entleert werden. Eine effiziente Verbindung zwischen den beiden Außenlagen kann erreicht werden, wenn die Innenflächen der Außenlagen mit einem thermoplastischen Material beschichtet sind. DE 10 2012 003969 A1 offenbart den Oberbegriff der Ansprüche 1 und 9.

Das thermoplastische Material, von dem hier die Rede ist, bezieht sich auf Kunststoffe, die zur Gruppe der Thermoplasten gehören. Diese Kunststoffe können in einem bestimmten Temperaturbereich plastisch verformt werden, ohne dass es zu einer thermischen Zersetzung des Materials kommt. Thermoplaste sind die einzigen Kunststoffe, die schmelzen und daher schweißbar sind. Um die beiden Außenlagen miteinander zu verbinden, werden die mit einem thermoplastischen Material beschichteten Innenflächen der Außenlagen zum Verschweißen aneinandergelegt. Dies geschieht entlang von Schweißelementen unter Druck und Erwärmung, wodurch sich eine Schmelze im thermoplastischen Material bildet. Dort, wo beide Innenflächen mit dem thermoplastischen Material beschichtet sind, verschmelzen die Schmelzen, und nach dem Abkühlen entsteht eine stoffschlüssige Verbindung, die als Schweißnaht bezeichnet wird.

Es gibt verschiedene Verfahren zum Verschweißen von thermoplastischen Kunststoffen, darunter Hochfrequenzschweißen, elektrische Induktionsheizung, heiße Druckluft, Licht- oder Laserstrahlung sowie Reibung. Diese Verfahren unterscheiden sich in der Art und Weise, wie die Wärme erzeugt wird, um das thermoplastische Material zu schmelzen.

Die bisher bekannten aufblasbaren Körper weisen in der Regel kein inneres Aufnahmevolumen auf, insbesondere kein verschließbares Aufnahmevolumen. Insbesondere ist nicht bekannt, ein zentrales, sich entlang einer Längsachse erstreckendes Aufnahmevolumen vorzusehen. Die etablierten Verfahren zur Herstellung von aufblasbaren Körpern sind nicht optimal geeignet, um Schwimmkörper mit einem verschließbaren Aufnahmevolumen herzustellen. Dieser Mangel an Aufnahmefähigkeit in den herkömmlichen aufblasbaren Körpern begrenzt ihre Anwendbarkeit in Situationen, in denen es erforderlich ist, Gegenstände in dem Schwimmkörper zu transportieren oder aufzunehmen.

Ausgehend vom Stand der Technik ist es daher die Aufgabe der vorliegenden Erfindung, ein Verfahren zur Herstellung eines Schwimmkörpers mit einem Aufnahmevolumen bereitzustellen, das eine unkomplizierte Verbindung zwischen der Außenlage und Innenlage gewährleistet und das sicherstellt, dass die Stellen, an denen Verbindungsnähte erstellt werden sollen, leicht zugänglich und von außen erreichbar sind.

Gemäß einem ersten Aspekt der Erfindung wird die genannte Aufgabe durch ein Verfahren mit den Merkmalen des Patentanspruchs 1 gelöst.

Das Verfahren ist auf die Herstellung eines Schwimmkörpers mit einem verschließbaren Aufnahmevolumen gerichtet. Das Verfahren weist einen Schritt des Bereitstellens einer ersten Außenlage, die eine erste Zugangsöffnung aufweist, einer ersten Innenlage, die eine zweite Zugangsöffnung aufweist, wobei deren Größe vorzugsweise der der ersten Zugangsöffnung entspricht, einer zweiten Außenlage und einer zweiten Innenlage auf. Die erste Außenlage, die zweite Außenlage, die erste Innenlage und die zweite Innenlage sind aus einem flächigen Material gebildet und weisen eine Innenfläche und eine Außenfläche auf. Die Innenfläche des flächigen Materials weist ein thermoplastisches Material auf. Weiter weist das Verfahren die folgenden Schritte auf. Anlegen der ersten Außenlage an die erste Innenlage, sodass die Innenfläche der ersten Außenlage der Innenfläche der ersten Innenlage, vorzugsweise unmittelbar, gegenüber liegt und die erste Zugangsöffnung über der zweiten Zugangsöffnung liegt. Erstellen einer ersten geschlossen Verbindungsnaht zwischen der ersten Außenlage und der ersten Innenlage um die erste und zweite Zugangsöffnung herum. Anlegen der zweiten Innenlage an die erste Innenlage, sodass die Innenfläche der ersten Innenlage der Innenfläche der zweiten Innenlage entlang des Randes der ersten Innenlage, vorzugsweise unmittelbar, gegenüber liegt. Erstellen einer zweiten geschlossen Verbindungsnaht zwischen der ersten Innenlage und der zweiten Innenlage entlang des Randes der ersten Innenlage, sodass die erste Außenlage von der ersten Innenlage und der zweiten Innenlage eingeschlossen ist. Umstülpen der Anordnung aus erster Außenlage, erster Innenlage und zweiter Innenlage durch die erste und zweite Zugangsöffnung, sodass die erste Außenlage außerhalb des von der ersten und zweiten Innenlage umschlossenen Bereichs ist. Anlegen der zweiten Außenlage an die erste Außenlage, sodass die Innenfläche der ersten Außenlage der Innenfläche der zweiten Außenlage entlang des Randes der erste Außenlage, vorzugsweise unmittelbar, gegenüber liegt und die erste und die zweite Innenlage von der ersten Außenlage und der zweiten Außenlage umschlossen sind. Erstellen einer dritten geschlossen Verbindungsnaht zwischen der ersten Außenlage und der zweiten Außenlage entlang des Randes der ersten Außenlage, sodass die erste Innenlage und die zweite Innenlage von der ersten und der zweite Außenlage eingeschlossen sind.

Wie bereits erwähnt weist das Verfahren den Schritt des Bereitstellens einer ersten Außenlage, die eine erste Zugangsöffnung aufweist, einer ersten Innenlage, die eine zweite Zugangsöffnung aufweist, deren Größe vorzugsweise der der ersten Zugangsöffnung entspricht, einer zweiten Außenlage und einer zweiten Innenlage auf. Unter der Außenlage wird diejenige Lage des Schwimmkörpers verstanden, die sich dann, wenn der Schwimmkörper hergestellt wurde, auf einer Außenseite des Schwimmkörpers befindet. Unter der Innenlage wird diejenige Lage des Schwimmkörpers verstanden, die sich dann, wenn der Schwimmkörper hergestellt wurde, auf einer Innenseite des Schwimmkörpers befindet. Das heißt, dass die beiden Außenlagen die äußere Oberfläche des Schwimmkörpers bilden und die beiden Innenlagen die innere Oberfläche des Schwimmkörpers bzw. die innere Oberfläche des Aufnahmevolumens bilden.

Die erste Außenlage, die zweite Außenlage, die erste Innenlage und die zweite Innenlage sind aus einem flächigen Material gebildet und weisen eine Innenfläche und eine Außenfläche auf. Unter einem flächigen Material wird verstanden, dass die Breite und/oder Länge wesentlich größer als die Höhe des flächigen Materials ist. Mit dem hier beschriebenen Verfahren und der Bereitstellung des flächigen Materials können besonders große Schwimmkörper hergestellt werden.

Die Innenfläche des flächigen Materials weist ein thermoplastisches Material auf. Unter einem thermoplastischen Material wird ein Kunststoff verstanden, der die Eigenschaft besitzt, bei Erwärmung schmelzbar zu sein und bei Abkühlung wieder in seiner vorliegenden Form zu erstarren. Durch Erwärmung der Innenfläche des thermoplastischen Materials wird zum einen erreicht, dass das flächige Material verformt werden kann, und zum anderen, dass die Innenfläche mit einer weiteren Innenfläche, die ein thermoplastisches Material aufweist, stoffschlüssig verbunden werden kann. Mit dem hier beschriebenen Verfahren können Schwimmkörper auf besonders einfache Weise hergestellt werden.

Wie bereits erwähnt, umfasst das Verfahren das Anlegen der ersten Außenlage an die erste Innenlage, sodass die Innenfläche der ersten Außenlage der Innenfläche der ersten Innenlage gegenüber liegt und die erste Zugangsöffnung über der zweiten Zugangsöffnung liegt. Dabei ist es bevorzugt, wenn die Innenflächen der ersten Außenlage und der ersten Innenlage unmittelbar aneinander anliegen. Es ist aber auch möglich, dass zwischen diesen Innenflächen wenigstens eine weitere Folie aus thermoplastischem Material vorgesehen wird, die später dazu dienen kann, kleinere Lecks selbsttätig zu verschließen.

Ferner umfasst das Verfahren das Erstellen einer ersten durchgehenden geschlossenen Verbindungsnaht zwischen der ersten Außenlage und der ersten Innenlage um die erste und zweite Zugangsöffnung herum auf.

Allgemein weist eine durchgehende Verbindungsnaht im Sinne der vorliegenden Erfindung entlang ihres Verlaufs keine Unterbrechungen auf, in denen die miteinander verbundenen Lagen nicht stoffschlüssig verbunden sind, sondern eine durchgehende Verbindungsnaht ist kontinuierlich ausgebildet. Ferner ist eine geschlossene Verbindungsnaht im Sinne der vorliegenden Erfindung derart ausgestaltet, dass sie eine geschlossene Linie bildet, also die Endpunkte nicht voneinander beabstandet sind.

Das Verfahren umfasst weiter das Anlegen der zweiten Innenlage an die erste Innenlage, sodass die Innenfläche der ersten Innenlage der Innenfläche der zweiten Innenlage entlang des Randes der ersten Innenlage gegenüber liegt und das Erstellen einer zweiten durchgehenden geschlossenen Verbindungsnaht zwischen der ersten Innenlage und der zweiten Innenlage entlang des Randes der ersten Innenlage, sodass die erste Außenlage von der ersten Innenlage und der zweiten Innenlage eingeschlossen ist. Dabei ist es bevorzugt, wenn die Innenflächen der ersten und zweiten Innenlage unmittelbar aneinander anliegen. Es ist aber auch möglich, dass zwischen diesen Innenflächen wenigstens eine weitere Folie aus thermoplastischem Material vorgesehen wird.

Die zweite Innenlage wird ferner so an die erste Innenlage angelegt, dass die erste Außenlage von der ersten und zweiten Innenlage eingeschlossen ist, die erste Außenlage zwischen der ersten und zweiten Innenlage und von deren Rand beabstandet angeordnet ist, und die erste und zweite Innenlage vollständig überlappen. Das heißt, dass die erste und zweite Innenlage an jeder Seite miteinander abschließen. Die erste Außenlage ist vorzugsweise größer als die erste und zweite Innenlage, sodass die erste Außenlage vor Anlage der zweiten Innenlage an die erste Innenlage eingeklappt oder zusammengefaltet wird. Dadurch wird erreicht, dass die zweite Innenlage so an die erste Innenlage angelegt werden kann, dass sie überlappend zueinander angeordnet sind.

Weiter weist das Verfahren das Umstülpen der Anordnung aus erster Außenlage, erster Innenlage und zweiter Innenlage durch die erste und zweite Zugangsöffnung auf, sodass die erste Außenlage nach dem Umstülpen außerhalb des von der ersten und zweiten Innenlage umschlossenen Bereichs ist. Durch das Umstülpen wird erreicht, dass die erste Außenlage, die davor von der ersten und zweiten Innenlage eingeschlossen war, nach außen tritt und nun außen angeordnet ist. Weiterhin wird dadurch erreicht, dass die Außenflächen der ersten und zweiten Innenlagen nach innen und somit zum Aufnahmevolumen weisen und die Innenflächen der ersten und zweiten Innenlagen nach außen weisen. Dies hat den Vorteil, dass die erste Außenlage nach dem Umstülpen vollständig ausgebreitet werden kann, sodass die zweite Außenlage auf besonders einfache Weise an die erste Außenlage angelegt werden kann. Durch das Umstülpen wird zudem erreicht, dass die erste und zweite Innenlage auf besonders einfache Weise miteinander verbunden werden können, da Positionen, an denen die durchgehenden geschlossenen Verbindungnähte erstellt werden sollen, stets gut und von außen, das heißt außerhalb des Aufnahmevolumens, erreichbar sind.

Zuletzt umfasst das Verfahren das Anlegen der zweiten Außenlage an die erste Außenlage, sodass die Innenfläche der ersten Außenlage der Innenfläche der zweiten Außenlage entlang des Randes der erste Außenlage gegenüber liegt und die erste und die zweite Innenlage von der ersten Außenlage und der zweiten Außenlage umschlossen sind sowie das Erstellen einer dritten durchgehenden geschlossenen Verbindungsnaht zwischen der ersten Außenlage und der zweiten Außenlage entlang des Randes der ersten Außenlage, sodass die erste Innenlage und die zweite Innenlage von der ersten und der zweite Außenlage eingeschlossen sind.

Auch hier ist es bevorzugt, wenn die Innenflächen der ersten und zweiten Außenlage unmittelbar aneinander anliegen. Es ist aber auch möglich, dass zwischen diesen Innenflächen wenigstens eine weitere Folie aus thermoplastischem Material vorgesehen wird, die später dazu dienen kann, kleinere Lecks selbsttätig zu verschließen.

Die zweite Außenlage wird außerdem so an die erste Außenlage angelegt, dass die zweite Außenlage und die erste Außenlage vollständig überlappen und die erste und zweite Innenlage einschließen. Dies hat den Vorteil, dass zwischen den Innenlagen und den Außenlagen ein Zwischenraum gebildet wird, der mit einem Fluid, vorzugsweise Luft oder Gas, gefüllt werden kann, um dem Schwimmkörper Auftrieb zu verleihen, sodass der Schwimmkörper auf einer Wasseroberfläche schwimmen kann.

Zusammenfassend kann also festgestellt werden, dass mit dem erfindungsgemäßen Verfahren ein Schwimmkörper mit einem von der ersten und zweiten Innenlage begrenzten Aufnahmevolumen hergestellt werden kann, bei dem die Außenlagen und Innenlagen stets auf besonders einfache Weise miteinander verbunden werden können. Insbesondere bei dem Erstellen einer durchgehenden geschlossenen Verbindungsnaht sind die Orte, an denen die geschlossenen Verbindungsnähte erstellt werden sollen, stets gut und von außen erreichbar. Dies hat den Vorteil, dass keine Werkzeuge, die zur Erstellung der geschlossenen Verbindungsnaht benötigt werden, in das Aufnahmevolumen geführt werden müssen.

In einer Ausführungsform sind die erste und die zweite Zugangsöffnung linienförmig ausgebildet und weisen vorzugsweise die gleiche Länge auf, wobei die dritte durchgehende geschlossene Verbindungsnaht zwischen der ersten Außenlage und der zweiten Außenlage einen ersten Seitenabschnitt aufweist, der sich auf einer ersten Seite der Zugangsöffnung beabstandet von und entlang dieser erstreckt und die dritte durchgehende geschlossene Verbindungsnaht zwischen der ersten Außenlage und der zweiten Außenlage einen zweiten Seitenabschnitt aufweist, der sich auf einer zweiten, der ersten gegenüberliegenden Seite der Zugangsöffnung beabstandet von und entlang dieser erstreckt. Durch die linienförmige Zugangsöffnungen, die die gleiche Länge aufweisen, lässt sich die erste geschlossene Verbindungsnaht auf besonders einfache Weise herstellen. Außerdem wird dadurch erreicht, dass ein linienförmiges Verschlusselement in die linienförmige Zugangsöffnungen eingebracht werden kann. Die dritte durchgehenden geschlossene Verbindungsnaht wird an dem äußeren Rand der ersten und zweiten Außenlage erstellt, sodass die Seitenabschnitte zwischen der dritten geschlossenen Verbindungsnaht und den Zugangsöffnungen angeordnet sind und vorzugsweise parallel zu diesen verlaufen.

In einer Ausführungsform wird nach dem Umstülpen, zwischen der ersten Außenlage und der ersten Innenlage, deren Innenflächen aneinander anliegen, eine vierte Verbindungsnaht zwischen der ersten und zweiten Zugangsöffnung und dem ersten Seitenabschnitt erstellt.

Durch die vierte Verbindungnaht wird erreicht, dass die erste Außenlage und die erste Innenlage am ersten Seitenabschnitt verbunden werden, wodurch aufgrund der zusätzlichen Verbindung zwischen der ersten Außenlage und der ersten Innenlage die Form des Schwimmkörpers dann weiter stabilisiert wird, wenn das Volumen zwischen den Innenlagen und den Außenlagen mit einem Fluid, also bevorzugt Luft, gefüllt ist. Die vierte geschlossene Verbindungnaht kann entweder nach oder vor dem Erstellen der dritten durchgehenden geschlossenen Verbindungsnaht erstellt werden. Dadurch ergibt sich ein höherer Freiheitsgrad in der Reihenfolge der Erstellung der geschlossenen Verbindungnähte.

In einer Ausführungsform wird nach dem Umstülpen zwischen der ersten Außenlage und der ersten Innenlage, deren Innenflächen aneinander anliegen, eine fünfte Verbindungsnaht zwischen der ersten und zweiten Zugangsöffnung und dem zweiten Seitenabschnitt erstellt. Durch die fünfte Verbindungnaht wird ebenfalls erreicht, dass die erste Außenlage und die erste Innenlage am zweiten Seitenabschnitt verbunden werden, wodurch die Form des Schwimmkörper dann weiter stabilisiert wird. Die fünfte Verbindungnaht kann entweder nach oder vor dem Erstellen der dritten und vierten Verbindungsnaht erstellt werden.

Die vierte und fünfte Verbindungsnaht müssen nicht durchgehend ausgebildet sein, da sie kein Volumen dichtend begrenzen, sondern nur eine Verbindung zur Stabilisierung der Form bilden.

In einer Ausführungsform wird nach dem Anlegen der zweiten Außenlage an die erste Außenlage zwischen der zweiten Außenlage und der zweiten Innenlage, deren Innenflächen aneinander anliegen, eine sechste Verbindungsnaht zwischen der ersten und zweiten Zugangsöffnung und dem ersten Seitenabschnitt erstellt. Durch die sechste Verbindungnaht wird erreicht, dass die zweite Außenlage und die zweite Innenlage am ersten Seitenabschnitt verbunden werden, wodurch die Form des Schwimmkörpers noch weiter stabilisiert wird. Die sechste Verbindungnaht kann entweder nach oder vor dem Erstellen der dritten, vierten oder fünften Verbindungsnaht erstellt werden, sofern die zweite Außenlage an die Außenlage angelegt ist. Es ist auch möglich, dass die sechste Verbindungsnaht gleichzeitig zusammen mit der vierten Verbindungsnaht erstellt wird, wobei die vierte und die sechste Verbindungsnaht dann übereinander liegen, was die Herstellung weiter vereinfacht.

In einer weiteren Ausführungsform wird nach dem Anlegen der zweiten Außenlage an die erste Außenlage zwischen der zweiten Außenlage und der zweiten Innenlage, deren Innenflächen aneinander anliegen, eine siebte Verbindungsnaht zwischen der ersten und zweiten Zugangsöffnung und dem zweiten Seitenabschnitt erstellt. Durch die siebte geschlossene Verbindungnaht wird erreicht, dass die zweite Außenlage und die zweite Innenlage am zweiten Seitenabschnitt verbunden werden, wodurch die Form des Schwimmkörpers dann noch weiter stabilisiert wird. Die siebte geschlossene Verbindungnaht kann entweder nach oder vor dem Erstellen der dritten, vierten, fünften oder sechsten Verbindungsnaht erstellt werden, sofern die zweiten Außenlage an der ersten Außenlage anliegt. Dabei ist es auch möglich, dass die siebte Verbindungsnaht gleichzeitig zusammen mit der fünften Verbindungsnaht erstellt wird, wobei die fünfte und die siebte Verbindungsnaht dann übereinander liegen, was die Herstellung weiter vereinfacht.

Bevorzugt verlaufen die vierte und die sechste Verbindungnaht parallel zum ersten Seitenabschnitt der dritten geschlossenen durchgehenden Verbindungnaht. Weiter bevorzugt sind die fünfte und siebte Verbindungnaht parallel zum zweiten Seitenabschnitt der dritten geschlossenen durchgehenden Verbindungnaht. Dadurch wird ein konstanter Abstand der jeweiligen geschlossenen Verbindungnähte zum jeweiligen Seitenabschnitt der dritten Verbindungnaht erreicht. Dies ist insbesondere dann von Vorteil, wenn ein Zwischenraum zwischen den Innenlagen und den Außenlagen mit einem Fluid, vorzugsweise Gas oder Luft, gefüllt wird.

Weiter bevorzugt sind die vierte, fünfte, sechste und siebte Verbindungnaht linienförmig und geradlinig ausgeführt, sodass sie parallel zur Zugangsöffnung verlaufen. Dadurch wird ein konstanter Abstand der jeweiligen geschlossenen Verbindungnähte zu den Zugangsöffnungen erreicht. Dies ist insbesondere dann von Vorteil, wenn ein Zwischenraum zwischen den Innenlagen und den Außenlagen mit einem Fluid, vorzugsweise Gas oder Luft, gefüllt wird, da dadurch eine gleichmäßige Belastungsverteilung erreicht wird.

In einer Ausführungsform wird nach dem Anlegen der zweiten Außenlage an die erste Außenlage eine achte Verbindungsnaht zwischen der zweiten Außenlage und der zweiten Innenlage erstellt, wobei die achte Verbindungsnaht der ersten und zweiten Zugangsöffnung gegenüberliegt und sich entlang von dessen Länge erstreckt. Durch die achte geschlossene Verbindungnaht wird erreicht, dass die zweite Außenlage und die zweite Innenlage gegenüber der Zugangsöffnung verbunden werden, was zu einer Stabilisierung der Form des Schwimmkörpers in der aufgeblasenen Form führt.

In einer bevorzugten Ausführungsform wird ein linienförmiges Verschlusselement bereitgestellt, wobei zwischen der Innenfläche des Randes der ersten Zugangsöffnung der ersten Außenlage mit dem Verschlusselement eine neunte durchgehende geschlossene Verbindungsnaht gebildet wird und/oder wobei zwischen der Innenfläche des Randes der zweiten Zugangsöffnung der ersten Innenlage mit dem Verschlusselement eine zehnte durchgehende geschlossene Verbindungsnaht gebildet wird. Die neunte und/oder zehnte geschlossene Verbindungsnaht werden umlaufend um das Verschlusselement entlang des Randes der Zugangsöffnungen erstellt, sodass das Verschlusselement über den gesamten Rand mit der ersten Außenlage und der ersten Innenlage verbunden wird. Durch das Verschlusselement ist das Aufnahmevolumen verschließbar. Vorzugsweise ist das Verschlusselement fuiddicht, sodass dadurch verhindert wird, dass während des Gebrauchs des Schwimmkörpers Wasser durch die Aufnahmeöffnung in das von der ersten und zweiten Innenlage begrenzte Aufnahmevolumen gelangt oder Luft daraus entweichen kann.

Besonders bevorzugt wird das linienförmige Verschlusselement gemeinsam mit der ersten Außenlage, der zweiten Außenlage, der ersten Innenlage und der zweiten Außenlage bereitgestellt, wobei die neunte und/oder zehnte durchgehende geschlossene Verbindungnaht erstellt wird, bevor die erste Innenlage an die erste Außenlage angelegt wird. Somit werden die neunte und/oder zehnte geschlossene Verbindungnaht erstellt, bevor die erste geschlossene Verbindungnaht erstellt wird. Dies hat zum einen den Vorteil, dass zu dem Zeitpunkt, bevor die erste Innenlage an die erste Außenlage angelegt wird, die Positionen an denen die neunte und/oder zehnte Verbindungnaht erstellt wird, leicht und von außen zugänglich sind. Zum anderen wird dadurch die Erstellung der ersten geschlossenen Verbindungnaht erleichtert, da der Ort der ersten geschlossenen Verbindungnaht durch das Verschlusselement vorgegeben werden kann.

In einer Ausführungsform ist die Außenfläche des flächigen Materials der ersten und der zweiten Innenlage und der ersten und der zweiten Außenlage frei von thermoplastischem Material. Dies hat den Vorteil, dass die Außenflächen bei der Erstellung der geschlossenen Verbindungnähte ihre Form beibehalten, sodass lediglich die Innenflächen schmelzen und eine stoffschlüssige Verbindung eingehen.

In einer Ausführungsform haben die erste Innenlage und zweite Innenlage die gleichen Abmessungen und/oder die erste Außenlage und zweite Außenlage haben die gleichen Abmessungen. Vorzugsweise sind die erste und die zweite Innenlage identisch ausgeführt. Dadurch wird ein besonders einfaches und kosteneffizientes Verfahren zur Herstellung eines Schwimmkörpers bereitgestellt, bei dem die Anzahl an Einzelteilen und die Anzahl der Verfahrensschritte geringgehalten wird.

Gemäß einem zweiten Aspekt der Erfindung wird die genannte Aufgabe durch einen Schwimmkörper mit den Merkmalen des Patentanspruchs 9 gelöst. Der Schwimmkörper weist ein verschließbares Aufnahmevolumen, eine erste Außenlage, die eine erste Zugangsöffnung aufweist, eine erste Innenlage, die eine zweite Zugangsöffnung aufweist, deren Größe vorzugsweise der der ersten Zugangsöffnung entspricht, eine zweite Außenlage und eine zweite Innenlage auf. Die erste Außenlage, die zweite Außenlage, die erste Innenlage und die zweite Innenlage sind aus einem flächigen Material gebildet und weisen eine Innenfläche und eine Außenfläche auf. Die Innenfläche des flächigen Materials weist ein thermoplastisches Material auf. Eine erste durchgehende geschlossene Verbindungsnaht ist zwischen der ersten Außenlage und der ersten Innenlage um die erste und die zweite Zugangsöffnung herum vorgesehen. Eine zweite durchgehende geschlossene Verbindungsnaht ist zwischen der ersten Innenlage und der zweiten Innenlage entlang des Randes der ersten Innenlage vorgesehen, wobei die zweite durchgehende geschlossene Verbindungsnaht zwischen der ersten Innenlage und der zweiten Innenlage in das zwischen der ersten Innenlage und der zweiten Innenlage ausgebildete Aufnahmevolumen ragt. Die erste und die zweite Innenlage sind von der ersten Außenlage und der zweiten Außenlage umschlossen. Eine dritte durchgehende geschlossene Verbindungsnaht ist zwischen der ersten Außenlage und der zweiten Außenlage entlang des Randes der ersten Außenlage vorgesehen, sodass die erste Innenlage und die zweite Innenlage von der ersten und der zweiten Außenlage eingeschlossen sind.

Unter der Außenlage wird diejenige Lage des Schwimmkörpers verstanden, die sich auf einer Außenseite des Schwimmkörpers befindet. Unter der Innenlage wird diejenige Lage des Schwimmkörpers verstanden, die sich auf einer Innenseite des Schwimmkörpers befindet. Das heißt, dass die beiden Außenlagen die äußere Oberfläche des Schwimmkörpers bilden und die beiden Innenlagen die innere Oberfläche des Schwimmkörpers bzw. die innere Oberfläche des Aufnahmevolumens bilden.

Die erste Außenlage, die zweite Außenlage, die erste Innenlage und die zweite Innenlage sind aus einem flächigen Material gebildet und weisen eine Innenfläche und eine Außenfläche auf. Unter einem flächigen Material wird verstanden, dass die Breite und/oder Länge wesentlich größer als die Höhe des flächigen Materials ist. Dadurch können Schwimmkörper mit einem besonders großen Aufnahmevolumen bereitgestellt werden.

Die Innenfläche des flächigen Materials weist ein thermoplastisches Material auf. Unter einem thermoplastischen Material wird ein Kunststoff verstanden, der die Eigenschaft besitzt, bei Erwärmung schmelzbar zu sein und bei Abkühlung wieder in seiner vorliegenden Form zu erstarren. Durch Erwärmung der Innenfläche des thermoplastischen Materials wird zum einen erreicht, dass das flächige Material verformt werden und zum anderen dass die Innenfläche mit einer weiteren Innenfläche, die ein thermoplastisches Material aufweist, stoffschlüssig verbunden werden kann. Der hier beschriebene Schwimmkörper weist dadurch einen besonders einfachen Aufbau auf.

Eine erste durchgehende geschlossene Verbindungsnaht ist zwischen der ersten Außenlage und der ersten Innenlage um die erste und die zweite Zugangsöffnung herum vorgesehen. Die beiden Lagen sind so zueinander ausgerichtet, dass die Zugangsöffnungen fluchtend ausgerichtet sind und die beiden Innenflächen mit dem thermoplastischen Material aneinander anliegen. Das Erstellen der ersten geschlossenen Verbindungsnaht kann aufgrund des thermoplastischen Materials durch Einbringen von Wärme auf die Fläche der Verbindungsnaht erfolgen. Durch die Erwärmung verschmelzen die beiden Innenflächen, sodass eine stoffschlüssige Verbindungsnaht entsteht. Dies hat den Vorteil, dass die beiden Innenflächen auf besonders einfache Weise und ohne zusätzliche Verbindungsmittel miteinander verbunden werden können.

Eine zweite durchgehende geschlossene Verbindungsnaht ist zwischen der ersten Innenlage und der zweiten Innenlage entlang des Randes der ersten Innenlage vorgesehen, wobei die zweite geschlossene Verbindungsnaht zwischen der ersten Innenlage und der zweiten Innenlage in das zwischen der ersten Innenlage und der zweiten Innenlage ausgebildete Aufnahmevolumen ragt. Die erste und die zweite Innenlage sind von der ersten Außenlage und der zweiten Außenlage umschlossen. Das Aufnahmevolumen wird durch die erste und zweite Innenlage definiert und begrenzt. Dadurch, dass die zweite geschlossene Verbindungnaht in das Aufnahmevolumen ragt, wird erreicht, dass die zweite geschlossene Verbindungsnaht auf besonders einfache Weise, wie im Zusammenhang mit dem erfindungsgemäßen Verfahren beschrieben, erstellt werden kann, sodass sich ein besonders einfacher Aufbau des Schwimmkörpers ergibt.

Eine dritte durchgehende geschlossene Verbindungsnaht ist zwischen der ersten Außenlage und der zweiten Außenlage entlang des Randes der ersten Außenlage vorgesehen, sodass die erste Innenlage und die zweite Innenlage von der ersten und der zweiten Außenlage eingeschlossen sind. Die zweite Außenlage wird so zu der ersten Außenlage ausgerichtet, dass die zweite Außenlage und die erste Außenlage vollständig überlappen und die erste und zweite Innenlage einschließen. Dies hat den Vorteil, dass zwischen den Innenlagen und den Außenlagen ein Zwischenraum gebildet ist, der mit einem Fluid, vorzugsweise Luft oder Gas, gefüllt werden kann, um dem Schwimmkörper Auftrieb zu verleihen, sodass der Schwimmkörper auf einer Wasseroberfläche schwimmen kann.

Zusammenfassend kann also festgestellt werden, dass ein Schwimmkörper mit einem Aufnahmevolumen bereitgestellt wird, bei dem die Außenlagen und Innenlagen stets auf besonders einfache Weise miteinander verbunden werden können, sodass sich ein besonders einfacher Aufbau des Schwimmkörpers ergibt. Außerdem wird ein Schwimmkörper bereitgestellt, bei dem die Außenfläche des flächigen Materials die äußere Oberfläche sowie die Oberfläche des Aufnahmevolumens bildet.

In einer Ausführungsform sind die erste und die zweite Zugangsöffnung linienförmig ausgebildet und weisen vorzugsweise die gleiche Länge auf, wobei die dritte durchgehende geschlossene Verbindungsnaht zwischen der ersten Außenlage und der zweiten Außenlage einen ersten Seitenabschnitt aufweist, der sich auf einer ersten Seite der Zugangsöffnung beabstandet von und entlang dieser erstreckt, und wobei die dritte durchgehende geschlossene Verbindungsnaht zwischen der ersten Außenlage und der zweiten Außenlage einen zweiten Seitenabschnitt aufweist, der sich auf einer zweiten, der ersten gegenüberliegenden Seite der Zugangsöffnung beabstandet von und entlang dieser erstreckt. Durch die linienförmige Zugangsöffnungen, die die gleiche Länge aufweisen, lässt sich die erste durchgehende geschlossene Verbindungsnaht auf besonders einfache Weise herstellen. Außerdem wird dadurch erreicht, dass ein linienförmiges Verschlusselement in die linienförmige Zugangsöffnungen eingebracht werden kann. Die dritte durchgehende geschlossene Verbindungsnaht ist an den äußeren Enden der ersten und zweiten Außenlage angeordnet, sodass die Seitenabschnitte zwischen der dritten durchgehenden geschlossenen Verbindungsnaht und den Zugangsöffnungen angeordnet sind.

In einer Ausführungsform ist zwischen der ersten Außenlage und der ersten Innenlage, deren Innenflächen zueinander weisen, eine vierte Verbindungsnaht zwischen der ersten und zweiten Zugangsöffnung und dem ersten Seitenabschnitt vorgesehen. Durch die vierte Verbindungnaht wird erreicht, dass die erste Außenlage und die erste Innenlage zwischen dem ersten Seitenabschnitt und den Zugangsöffnungen verbunden sind, wodurch sich eine höhere Stabilität des Schwimmkörpers ergibt, wenn dieser aufgeblasen ist.

In einer Ausführungsform ist zwischen der ersten Außenlage und der ersten Innenlage, deren Innenflächen zueinander weisen, eine fünfte Verbindungsnaht zwischen der ersten und zweiten Zugangsöffnung und dem zweiten Seitenabschnitt vorgesehen. Durch die fünfte Verbindungnaht wird ebenfalls erreicht, dass die erste Außenlage und die erste Innenlage zwischen dem zweiten Seitenabschnitt und den Zugangsöffnungen verbunden sind, wodurch sich die Stabilität des Schwimmkörpers weiter erhöht.

In einer Ausführungsform ist zwischen der zweiten Außenlage und der zweiten Innenlage, deren Innenflächen zueinander weisen, eine sechste Verbindungsnaht zwischen der ersten und zweiten Zugangsöffnung und dem ersten Seitenabschnitt vorgesehen. Durch die sechste Verbindungnaht wird erreicht, dass die zweite Außenlage und die zweite Innenlage zwischen dem ersten Seitenabschnitt und den Zugangsöffnungen verbunden sind, wodurch sich die Stabilität des Schwimmkörpers vergrößert.

In einer Ausführungsform ist zwischen der zweiten Außenlage und der zweiten Innenlage, deren Innenflächen zueinander weisen, eine siebte Verbindungsnaht zwischen der ersten und zweiten Zugangsöffnung und dem zweiten Seitenabschnitt vorgesehen. Durch die siebte Verbindungnaht wird erreicht, dass die zweite Außenlage und die zweite Innenlage zwischen der zweiten Seitenabschnitt und den Zugangsöffnungen verbunden sind, wodurch sich ein höhere Formstabilität des Schwimmkörpers ergibt.

In einer Ausführungsform ist eine achte Verbindungsnaht zwischen der zweiten Außenlage und der zweiten Innenlage vorgesehen, wobei die achte Verbindungsnaht der ersten und zweiten Zugangsöffnung gegenüberliegt und sich entlang von dessen Länge erstreckt. Durch die achte Verbindungnaht wird erreicht, dass die zweite Außenlage und die zweite Innenlage gegenüber der Zugangsöffnung verbunden sind, wodurch sich eine weiter verbesserte Stabilität ergibt.

In einer Ausführungsform ist ein linienförmiges Verschlusselement vorgesehen, wobei zwischen der Innenfläche des Randes der ersten Zugangsöffnung der ersten Außenlage mit dem Verschlusselement eine neunte durchgehende geschlossene Verbindungsnaht vorgesehen ist und/oder wobei zwischen der Innenfläche des Randes der zweiten Zugangsöffnung der ersten Innenlage mit dem Verschlusselement eine zehnte durchgehende geschlossene Verbindungsnaht vorgesehen ist. Die neunte und zehnte geschlossene Verbindungsnaht sind umlaufend um das Verschlusselement entlang des Randes der Zugangsöffnungen angeordnet, sodass das Verschlusselement über den gesamten Rand mit der ersten Außenlage und der ersten Innenlage verbunden ist. Durch das Verschlusselement ist das Aufnahmevolumen verschließbar. Vorzugsweise ist das Verschlusselement fluiddicht, sodass dadurch verhindert wird, dass während des Gebrauchs des Schwimmkörpers Wasser in die Aufnahmeöffnung gelangt und Luft daraus entweichen kann.

In einer Ausführungsform ist die Außenfläche des flächigen Materials der ersten und der zweiten Innenlage und der ersten und der zweiten Außenlage frei von thermoplastischem Material. Dies hat den Vorteil, dass die Außenflächen bei der Erstellung der geschlossenen Verbindungnähte ihre Form beibehalten, sodass lediglich die Innenflächen schmelzen und eine stoffschlüssige Verbindung eingehen.

In einer Ausführungsform haben die erste Innenlage und zweite Innenlage die gleichen Abmessungen und/oder haben die erste Außenlage und zweite Außenlage die gleichen Abmessungen. Vorzugsweise sind die erste und die zweite Innenlage identisch ausgeführt. Dadurch wird ein Schwimmkörper mit einem besonders einfachen Aufbau bereitgestellt, bei dem die Anzahl an Einzelteilen geringgehalten wird.

In einer Ausführungsform ist zwischen der ersten Außenlage und der ersten Innenlage und/oder zwischen der zweiten Außenlage und der zweiten Innenlage mindestens ein Zwischenraum gebildet, wobei in der ersten oder zweiten Außenlage mindestens eine Zuführungsöffnung angeordnet ist, wobei dem Zwischenraum über die mindestens eine Zuführungsöffnung ein Fluid zugeführt werden kann. Bei der Zuführungsöffnung kann es sich um ein Ventil, vorzugsweise ein Mundventil, handeln. Dadurch wird erreicht, dass der mindestens eine Zwischenraum durch einen Nutzer des Schwimmkörpers mit Luft befüllt werden kann.

In einer Ausführungsform ist die Zuführungsöffnung mit einer Gaskartusche verbunden, sodass dem mindestens einen Zwischenraum Gas aus der Gaskartusche zugeführt werden kann. Die Gaskartusche umfasst vorzugsweise einen weiter bevorzugt zylindrischen Behälter, der eine Druckgasquelle, vorzugsweise in Form von komprimiertem Gas enthält. Die Gaskartusche weist weiter vorzugsweise ein Ventilmechanismus auf, der eine präzise Steuerung und Freisetzung des Gases durch einen Nutzer ermöglicht. Durch die Betätigung des Ventilmechanismus wird das Gas der Gaskartusche über die Zuführungsöffnung in den mindestens einen Zwischenraum geführt. Dies hat den Vorteil, dass der mindestens eine Zwischenraum mit dem Gas gefüllt werden kann, ohne dass ein Nutzer selbstständig Luft in den Zwischenraum einbringen muss, was zu einer besonders einfachen Nutzung des Schwimmkörpers beiträgt. Außerdem kann der Zwischenraum durch die Gaskartusche besonders schnell mit dem Gas gefüllt werden, sodass der Schwimmkörper in besonders kurzer Zeit einsatzbereit ist. Zuletzt ermöglicht die Gaskartusche auch, dass der Zwischenraum auch dann mit dem Gas befüllt werden kann, wenn der Schwimmkörper sich unter Wasser befindet. Dies ist gerade dann vorteilhaft, wenn der Schwimmkörper während eines Tauchvorgangs dazu verwendet werden soll Gegenstände, die in dem Aufnahmevolumen platziert wurden, an die Wasseroberfläche zu befördern.

In einer Ausführungsform ist in der ersten oder zweiten Außenlage mindestens ein Überdruckventil angeordnet, das mit dem mindestens einem Zwischenraum verbunden ist, sodass das Fluid aus dem Zwischenraum herausgefördert werden kann. Durch das Überdruckventil wird das Risiko durch einen Überdruck in dem mindestens einen Zwischenraumes verhindert, indem überschüssiges Gas oder Luft aus dem mindestens einen Zwischenraum abgelassen wird, sobald ein vordefinierter Druck erreicht wird. Dadurch wird verhindert, dass der Schwimmkörper platzt oder sich unkontrolliert aufbläht, was potenziell zu Beschädigungen oder Verletzungen führen könnte.

Weitere Merkmale, Vorteile und Anwendungsmöglichkeiten der vorliegenden Erfindung ergeben sich aus der nachfolgenden Beschreibung des Ausführungsbeispiels und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.

Nachfolgend wird die vorliegende Erfindung anhand einer lediglich ein bevorzugtes Ausführungsbeispiel zeigenden Zeichnung erläutert, in der
- Figuren 1: eine schematische Schnittansicht eines Ausführungsbeispiels eines erfindungsgemäßen Schwimmkörpers zeigt,
- Figuren 2a und 2b: schematische Ansichten des Ausführungsbeispiels des erfindungsgemäßen Schwimmkörpers aus Figur 1 zeigen,
- Figuren 3a und 3b: schematische Ansichten eines weiteren Ausführungsbeispiels des erfindungsgemäßen Schwimmkörpers aus Figur 1 zeigen,
- Figuren 4a bis 6c: schematische Ansichten von Schritten eines erfindungsgemäßen Verfahrens zur Herstellung des erfindungsgemäßen Schwimmkörpers aus Figur 1 zeigen und
- Figur 7: eine schematische Darstellung einer weiteren Ausführungsform des erfindungsgemäßen Verfahrens zeigt.

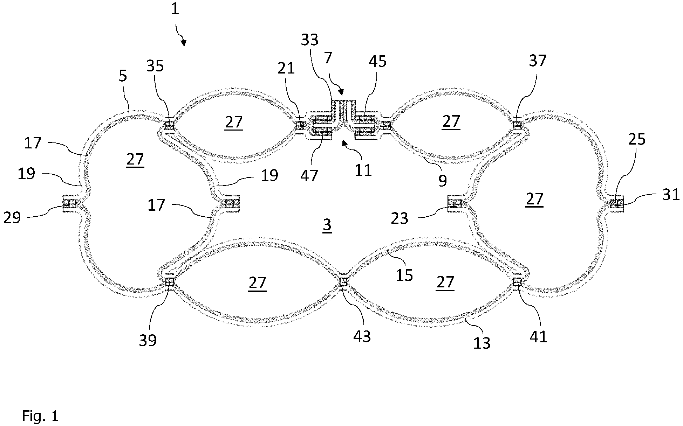

Figur 1 zeigt eine schematische Schnittansicht eines Ausführungsbeispiels eines erfindungsgemäßen Schwimmkörpers 1. Der Schwimmkörper 1 weist ein verschließbares Aufnahmevolumen 3, eine erste Außenlage 5 mit einer ersten Zugangsöffnung 7 und eine erste Innenlage 9 mit einer zweiten Zugangsöffnung 11 auf. Das Aufnahmevolumen 3 ist gegenüber der Umgebung abgedichtet, sodass darin kein Wasser eindringen kann, auch wenn sich der Schwimmkörper 1 unter Wasser befindet. Die Größe der zweiten Zugangsöffnung 11 entspricht in diesem Ausführungsbeispiel der Größe der ersten Zugangsöffnung 7. Weiter weist der Schwimmkörper 1 eine zweite Außenlage 13 und eine zweite Innenlage 15 auf. Unter den Außenlagen 5, 13 wird diejenige Lage des Schwimmkörpers 1 verstanden, die sich auf einer Außenseite des Schwimmkörpers 1 befindet. Unter den Innenlagen 9, 15 wird diejenige Lage des Schwimmkörpers 1 verstanden, die sich auf einer Innenseite des Schwimmkörpers 1 befindet. Das heißt, dass die beiden Außenlagen 5, 13 die äußere Oberfläche des Schwimmkörpers 1 bilden und die beiden Innenlagen 9, 15 die innere Oberfläche des Schwimmkörpers 1 bzw. die innere Oberfläche des Aufnahmevolumens 3 bilden.

Die erste Außenlage 5, die zweite Außenlage 13, die erste Innenlage 9 und die zweite Innenlage 15 sind aus einem flächigen Material gebildet und weisen eine Innenfläche 17 und eine Außenfläche 19 auf. Unter einem flächigen Material wird verstanden, dass die Breite und/oder Länge wesentlich größer als die Höhe des flächigen Materials ist.

Die Innenfläche 17 des flächigen Materials weist ein thermoplastisches Material auf. Die Außenfläche 19 ist frei von thermoplastischem Material. Unter einem thermoplastischen Material wird ein Kunststoff verstanden, der die Eigenschaft besitzt, bei Erwärmung schmelzbar zu sein und bei Abkühlung wieder in seiner vorliegenden Form zu erstarren. Durch Erwärmung der Innenfläche 17 des thermoplastischen Materials wird zum einen erreicht, dass das flächige Material verformt werden kann, und zum anderen, dass die Innenfläche 17 mit einer weiteren Innenfläche 17, die ein thermoplastisches Material aufweist, stoffschlüssig verbunden werden kann.

Eine erste durchgehende geschlossene Verbindungsnaht 21 ist zwischen der ersten Außenlage 5 und der ersten Innenlage 9 um die erste und die zweite Zugangsöffnung 7, 11 herum vorgesehen. Die beiden Lagen sind so zueinander ausgerichtet, dass die Zugangsöffnungen 7, 11 fluchtend ausgerichtet sind und die beiden Innenflächen 17 mit dem thermoplastischen Material aneinander anliegen. Das Erstellen der ersten geschlossenen Verbindungsnaht 21 kann aufgrund des thermoplastischen Materials durch Einbringen von Wärme auf die Fläche der Verbindungsnaht 21 erfolgen. Durch die Erwärmung verschmelzen die beiden Innenflächen 17, sodass eine stoffschlüssige Verbindungsnaht 21 entsteht. Dies hat den Vorteil, dass die beiden Innenflächen 17 auf besonders einfache Weise und ohne zusätzliche Verbindungsmittel miteinander verbunden werden können.

Eine zweite durchgehende geschlossene Verbindungsnaht 23 ist zwischen der ersten Innenlage 9 und der zweiten Innenlage 15 entlang des Randes der ersten Innenlage 9 vorgesehen, wobei die zweite geschlossene Verbindungsnaht 23 zwischen der ersten Innenlage 9 und der zweiten Innenlage 15 in das zwischen der ersten Innenlage 9 und der zweiten Innenlage 15 ausgebildete Aufnahmevolumen 3 ragt. Die erste und die zweite Innenlage 9, 15 sind von der ersten Außenlage 5 und der zweiten Außenlage 13 umschlossen. Das Aufnahmevolumen 3 wird durch die erste und zweite Innenlage 9, 15 definiert und begrenzt. Dadurch, dass die zweite geschlossene Verbindungnaht 23 in das Aufnahmevolumen 3 ragt, wird erreicht, dass die zweite geschlossene Verbindungsnaht 23 auf besonders einfache Weise, wie im Zusammenhang mit dem erfindungsgemäßen Verfahren nachfolgend beschrieben, erstellt werden kann, sodass sich ein besonders einfacher Aufbau des Schwimmkörpers 1 ergibt.

Eine dritte durchgehende geschlossene Verbindungsnaht 25 ist zwischen der ersten Außenlage 5 und der zweiten Außenlage 13 entlang des Randes der ersten Außenlage 5 vorgesehen, sodass die erste Innenlage 9 und die zweite Innenlage 15 von der ersten und der zweiten Außenlage 5, 13 eingeschlossen sind. Die zweite Außenlage 13 wird so zu der ersten Außenlage 5 ausgerichtet, dass die zweite Außenlage 13 und die erste Außenlage 5 vollständig überlappen und die erste und zweite Innenlage 9, 15 einschließen. Dies hat den Vorteil, dass zwischen den Innenlagen 9, 15 und den Außenlagen 5, 13 ein Zwischenraum 27 gebildet ist, der mit einem Fluid, vorzugsweise Luft oder Gas, gefüllt werden kann, um dem Schwimmkörper 1 Auftrieb zu verleihen, sodass der Schwimmkörper 1 auf einer Wasseroberfläche schwimmen kann.

Allgemein weist eine durchgehende Verbindungsnaht im Sinne der vorliegenden Erfindung entlang ihres Verlaufs keine Unterbrechungen auf, in denen die miteinander verbundenen Lagen nicht stoffschlüssig verbunden sind, sondern eine durchgehende Verbindungsnaht ist kontinuierlich ausgebildet. Ferner ist eine geschlossene Verbindungsnaht im Sinne der vorliegenden Erfindung derart ausgestaltet, dass sie eine geschlossene Linie bildet, also die Endpunkte nicht voneinander beabstandet sind.

Die erste und die zweite Zugangsöffnung 7, 11 sind in diesem Ausführungsbeispiel linienförmig ausgebildet und weisen in diesem Ausführungsbeispiel die gleiche Länge auf. Die dritte durchgehende geschlossene Verbindungsnaht 25 zwischen der ersten Außenlage 5 und der zweiten Außenlage 13 weist in diesem Ausführungsbeispiel einen ersten Seitenabschnitt 29 auf, der sich auf einer ersten Seite der Zugangsöffnung 7, 11 beabstandet von und entlang dieser erstreckt. Die dritte durchgehende geschlossene Verbindungsnaht 25 zwischen der ersten Außenlage 5 und der zweiten Außenlage 13 weist einen zweiten Seitenabschnitt 31 auf, der sich auf einer zweiten, der ersten gegenüberliegenden Seite der Zugangsöffnung 7, 11 beabstandet von und entlang dieser erstreckt. Durch die linienförmige Zugangsöffnungen 7, 11, die die gleiche Länge aufweisen, lässt sich die erste durchgehende geschlossene Verbindungsnaht 25 auf besonders einfache Weise herstellen. Außerdem wird dadurch erreicht, dass ein linienförmiges Verschlusselement 33 in die linienförmige Zugangsöffnungen 7, 11 eingebracht werden kann. Die dritte durchgehende geschlossene Verbindungsnaht 25 ist an den äußeren Enden der ersten und zweiten Außenlage 5, 13 angeordnet, sodass die Seitenabschnitte 29, 31 zwischen der dritten durchgehenden geschlossenen Verbindungsnaht 25 und den Zugangsöffnungen 7, 11 angeordnet sind.

Zwischen der ersten Außenlage 5 und der ersten Innenlage 9, deren Innenflächen 17 zueinander weisen, ist eine vierte Verbindungsnaht 35 zwischen der ersten und zweiten Zugangsöffnung 7, 11 und dem ersten Seitenabschnitt 29 vorgesehen. Durch die vierte Verbindungnaht 35 wird erreicht, dass die erste Außenlage 5 und die erste Innenlage 9 zwischen dem ersten Seitenabschnitt 29 und den Zugangsöffnungen 7, 11 verbunden sind, wodurch sich ein höhere Stabilität des Schwimmkörpers 1 ergibt, wenn dieser aufgeblasen ist. Zwischen der ersten Außenlage 5 und der ersten Innenlage 9, deren Innenflächen 17 zueinander weisen, ist eine fünfte Verbindungsnaht 37 zwischen der ersten und zweiten Zugangsöffnung 7, 11 und dem zweiten Seitenabschnitt 31 vorgesehen. Durch die fünfte Verbindungnaht 37 wird ebenfalls erreicht, dass die erste Außenlage 5 und die erste Innenlage 9 zwischen dem zweiten Seitenabschnitt 31 und den Zugangsöffnungen 7, 11 verbunden sind, wodurch sich die Stabilität des Schwimmkörpers 1 weiter erhöht.

Zwischen der zweiten Außenlage 13 und der zweiten Innenlage 15, deren Innenflächen 17 zueinander weisen, ist eine sechste Verbindungsnaht 39 zwischen der ersten und zweiten Zugangsöffnung 7, 11 und dem ersten Seitenabschnitt 29 vorgesehen. Durch die sechste Verbindungnaht 39 wird erreicht, dass die zweite Außenlage 13 und die zweite Innenlage 15 zwischen dem ersten Seitenabschnitt 29 und den Zugangsöffnungen 7, 11 verbunden sind, wodurch sich die Stabilität des Schwimmkörpers 1 vergrößert.

Zwischen der zweiten Außenlage 13 und der zweiten Innenlage 15, deren Innenflächen 17 zueinander weisen, ist eine siebte Verbindungsnaht 41 zwischen der ersten und zweiten Zugangsöffnung 7, 11 und dem zweiten Seitenabschnitt 31 vorgesehen. Durch die siebte Verbindungnaht 41 wird erreicht, dass die zweite Außenlage 13 und die zweite Innenlage 15 zwischen der zweiten Seitenabschnitt 31 und den Zugangsöffnungen 7, 11 verbunden sind, wodurch sich ein höhere Formstabilität des Schwimmkörpers 1 ergibt.

Eine achte Verbindungsnaht 43 ist zwischen der zweiten Außenlage 13 und der zweiten Innenlage 15 vorgesehen, wobei die achte Verbindungsnaht 43 der ersten und zweiten Zugangsöffnung 7, 11 gegenüberliegt und sich entlang von dessen Länge erstreckt. Durch die achte Verbindungnaht 43 wird erreicht, dass die zweite Außenlage 13 und die zweite Innenlage 15 gegenüber der Zugangsöffnung 7, 11 verbunden sind, wodurch sich eine weiter verbesserte Stabilität ergibt.

Die vierte, fünfte, sechste, siebte und achte Verbindungsnaht 35, 37, 39, 41, 43 sind in dem vorliegenden Ausführungsbeispiel eine durchgehende Verbindungsnaht. In einem alternativen Ausführungsbeispiel können diese Verbindungsnähte auch Unterbrechungen aufweisen, sodass sie nicht durchgehend ausgeführt sind. Dadurch wird ein höherer Freiheitsgrad bei der Bestimmung des Aufnahmevolumens 3 erreicht.

Zwischen der Innenfläche 17 des Randes der ersten Zugangsöffnung 7 der ersten Außenlage 5 ist mit dem Verschlusselement 33 eine neunte durchgehende geschlossene Verbindungsnaht 45 vorgesehen. Zwischen der Innenfläche 17 des Randes der zweiten Zugangsöffnung 11 der ersten Innenlage 9 ist mit dem Verschlusselement 33 eine zehnte durchgehende geschlossene Verbindungsnaht 47 vorgesehen. Die neunte und zehnte geschlossene Verbindungsnaht 45, 47 sind umlaufend um das Verschlusselement 33 entlang des Randes der Zugangsöffnungen 7, 11 angeordnet, sodass das Verschlusselement 33 über den gesamten Rand mit der ersten Außenlage 5 und der ersten Innenlage 9 verbunden ist. Durch das Verschlusselement 33 ist das Aufnahmevolumen 3 verschließbar. Vorzugsweise ist das Verschlusselement 33 wasserdicht, sodass dadurch verhindert wird, dass während des Gebrauchs des Schwimmkörpers 1 Wasser in die Aufnahmeöffnung 3 gelangt.

Die Außenfläche 19 des flächigen Materials der ersten und der zweiten Innenlage 9, 15 und der ersten und der zweiten Außenlage 5, 13 ist frei von thermoplastischem Material. Dies hat den Vorteil, dass die Außenflächen 19 bei der Erstellung der Verbindungnähte ihre Form beibehalten, sodass lediglich die Innenflächen 17 schmelzen und eine stoffschlüssige Verbindung eingehen.

Die erste Innenlage 9 und zweite Innenlage 15 haben die gleichen Abmessungen. Auch die erste Außenlage 5 und zweite Außenlage 13 haben die gleichen Abmessungen. Es ist aber auch denkbar, dass die Lagen voneinander abweichende Abmessungen haben. Vorzugsweise sind die erste und die zweite Innenlage 9, 15 identisch ausgeführt. Dadurch wird ein Schwimmkörper 1 mit einem besonders einfachen Aufbau bereitgestellt, bei dem die Anzahl an Einzelteilen geringgehalten wird.

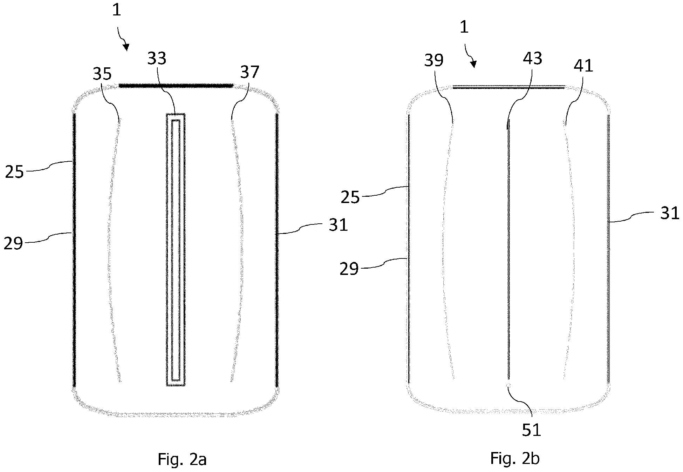

Figuren 2a und 2b zeigen schematische Ansichten des Ausführungsbeispiels des erfindungsgemäßen Schwimmkörpers 1 aus Figur 1, wobei Figur 2a eine schematische Draufsicht und Figur 2b eine schematische Unteransicht des Schwimmkörpers 1 zeigt. Der Schwimmkörper 1 weist Zuführungsöffnungen 49 auf, über die dem Zwischenraum 27 ein Fluid zugeführt werden kann. Bei den Zuführungsöffnung 49 kann es sich um ein Ventil, vorzugsweise ein Mundventil, handeln. Dadurch wird erreicht, dass der mindestens eine Zwischenraum 27 durch einen Nutzer des Schwimmkörpers 1 mit Luft befüllt werden kann. Außerdem ist zu erkennen, dass eine weitere Zuführungsöffnung 51 vorgesehen ist, die durch die achte Verbindungsnaht 43 hindurchgeht und durch die das Aufnahmevolumen 3 mit der Umgebung verbunden ist, ohne dass jedoch eine Verbindung zwischen der Umgebung und dem Zwischenraum 27 geschaffen wird. Die weitere Zuführungsöffnung 51 kann fluiddicht verschlossen werden und dient dazu, das Aufnahmevolumen 3 bei geschlossenem Verschlusselement 33 evakuieren oder wieder belüften zu können.

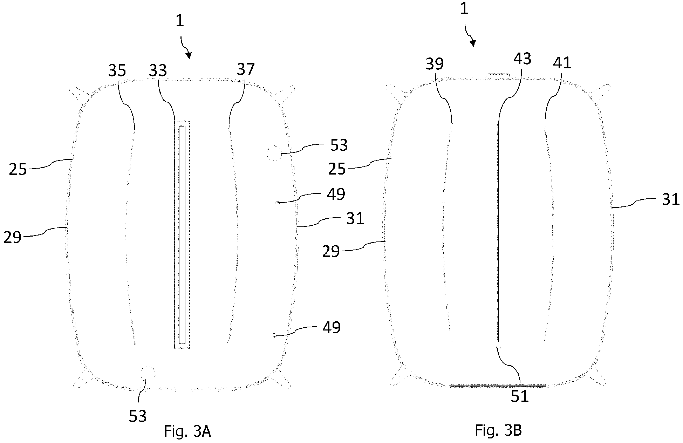

Figuren 3a und 3b zeigen schematische Ansichten eines weiteren Ausführungsbeispiels des erfindungsgemäßen Schwimmkörpers 1 aus Figur 1, wobei Figur 3a eine schematische Draufsicht und Figur 3b eine schematische Unteransicht des Schwimmkörpers 1 zeigt. In diesem Ausführungsbeispiel weist der Schwimmkörper 1 mehrere Zuführöffnungen 49 auf. Außerdem sind in der ein ersten Außenlage 5 zwei Überdruckventile 53 angeordnet, die mit dem mindestens einem Zwischenraum 27 verbunden ist, sodass das Fluid aus dem Zwischenraum 27 herausgefördert werden kann. Durch das Überdruckventil 53 wird das Risiko durch einen Überdruck in dem mindestens einen Zwischenraumes 27 verhindert, indem überschüssiges Gas oder Luft aus dem mindestens einen Zwischenraum 27 abgelassen wird, sobald ein vordefinierter Druck erreicht wird. Dadurch wird verhindert, dass der Schwimmkörper 1 platzt oder sich unkontrolliert aufbläht, was potenziell zu Beschädigungen oder Verletzungen führen könnte.

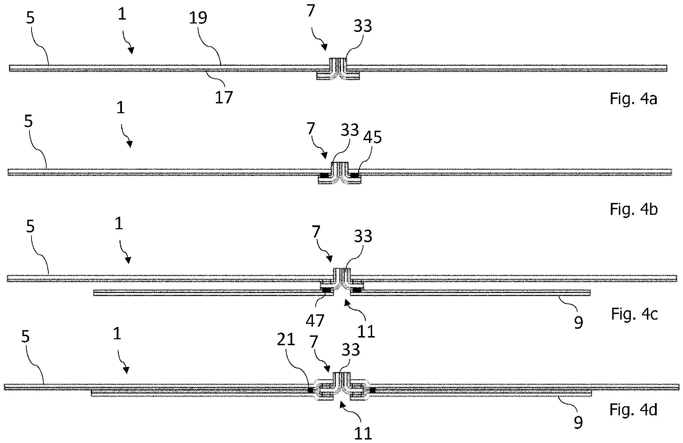

Figuren 4a bis 6c zeigen jeweils schematische Ansichten eines Schrittes eines erfindungsgemäßen Verfahrens zur Herstellung eines erfindungsgemäßen Schwimmkörpers 1 aus den Figuren 1 bis 3b, wobei Figur 4a ein Anlegen der ersten Außenlage 5 an das Verschlusselement 33 zeigt. Das Verschlusselement 33 weist auf einer äußeren Oberfläche ebenfalls ein thermoplastisches Material auf. Wie bereits erwähnt weist die erste Außenlage 5 die erste Zugangsöffnung 7 auf, sodass das Verschlusselement 33 so in die erste Zugangsöffnung 7 eingebracht bzw. durch diese hindurchgeführt werden kann, dass die Innenfläche 17 der ersten Außenlage auf dem Verschlusselement 33 aufliegt. Wie in Figur 4b gezeigt, wird die neunte durchgehende geschlossene Verbindungsnaht 45 zwischen der ersten Außenlage 5 und dem Verschlusselement 33 erstellt. Die neunte durchgehende geschlossene Verbindungsnaht 45 ist in Figur 4b fett dargestellt.

In einem nächsten Schritt wird in dem hier beschriebenen Ausführungsbeispiel die erste Innenlage 9 so an das Verschlusselement 33 angelegt, dass die Innenfläche 17 der ersten Außenlage 5 der Innenfläche 17 der ersten Innenlage 9 unmittelbar gegenüber liegt und die erste Zugangsöffnung 7 über der zweiten Zugangsöffnung 11 liegt. Anschließend wird die zehnte durchgehende geschlossene Verbindungsnaht 47 erstellt, wie in Figur 4c dargestellt. Generell ist es auch denkbar, dass das Erstellen der neunten durchgehenden geschlossenen Verbindungsnaht 45 und das Erstellen der zehnten durchgehenden geschlossenen Verbindungsnaht 47 gleichzeitig durchgeführt werden.

Als nächstes wird, wie in Figur 4d gezeigt, die erste Außenlage 5 so an die erste Innenlage 9 angelegt, dass ihre Innenflächen 17 sich berühren, und es wird die erste durchgehende geschlossene Verbindungsnaht 21 zwischen der ersten Außenlage 5 und der ersten Innenlage 9 um die erste und zweite Zugangsöffnung 7, 11 herum erstellt. Die neunte und zehnte geschlossene Verbindungsnaht 45, 47 werden umlaufend um das Verschlusselement 33 entlang des Randes der Zugangsöffnungen 7, 11 erstellt, sodass das Verschlusselement 33 über den gesamten Rand mit der ersten Außenlage 5 und der ersten Innenlage 9 verbunden wird.

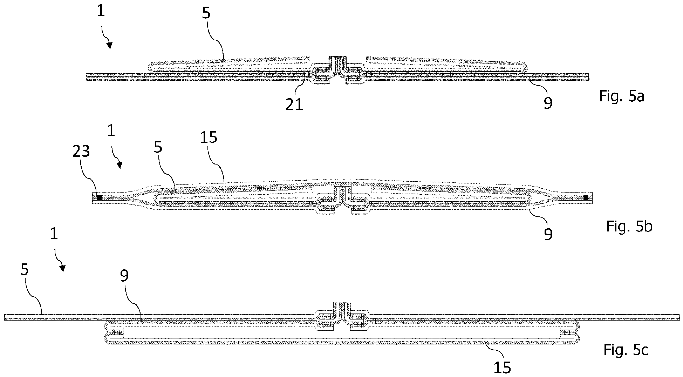

Figur 5a zeigt ein Einklappen oder Zusammenfalten der ersten Außenlage 5 an die erste Innenlage 9. Dies ist notwendig, da die erste Außenlage 5 größer als die erste und zweite Innenlage 9, 15 ist, sodass die zweite Innenlage 15 so an die erste Innenlage 9 angelegt werden kann, dass sie überlappend zueinander angeordnet sind.

Figur 5b zeigt ein Anlegen der zweiten Innenlage 15 an die erste Innenlage 9, sodass bei dem hier beschriebenen Ausführungsbeispiel die Innenfläche 17 der ersten Innenlage 9 der Innenfläche 17 der zweiten Innenlage 15 entlang des Randes der ersten Innenlage 9 unmittelbar gegenüber liegt, und das Erstellen der zweiten durchgehenden geschlossenen Verbindungsnaht 23 zwischen der ersten Innenlage 9 und der zweiten Innenlage 15 entlang des Randes der ersten Innenlage 9, sodass die erste Außenlage 5 von der ersten Innenlage 9 und der zweiten Innenlage 15 eingeschlossen ist. Die zweite Innenlage 15 wird so an die erste Innenlage 9 angelegt, dass die erste Außenlage 5 von der ersten und zweiten Innenlage 9, 15 eingeschlossen ist, die erste Außenlage 5 zwischen der ersten und zweiten Innenlage 9, 15 und von deren Rand beabstandet angeordnet ist und die erste und zweite Innenlage 9, 15 vollständig überlappen. Das heißt, dass die erste und zweite Innenlage 9, 15 an jeder Seite miteinander abschließen.

Figur 5c zeigt einen Zustand nach einem Umstülpen der Anordnung aus erster Außenlage 5, erster Innenlage 9 und zweiter Innenlage 15 durch das Verschlusselement 33 bzw. die erste und zweite Zugangsöffnung 7, 11. Nach dem Umstülpen ist die erste Außenlage 5 außerhalb des in Figur 5b gezeigten, von der ersten und zweiten Innenlage 9, 15 umschlossenen Bereichs. Durch das Umstülpen wird erreicht, dass die erste Außenlage 5, die davor von der ersten und zweiten Innenlage 9, 15 eingeschlossen war, nach außen tritt und nun außen angeordnet ist. Weiterhin wird dadurch erreicht, dass die Außenflächen 19 der ersten und zweiten Innenlagen 9, 15 nach innen und somit zum Aufnahmevolumen 3 weisen und die Innenflächen 17 der ersten und zweiten Innenlagen 9, 15 nach außen weisen. Dies hat den Vorteil, dass die erste Außenlage 5 nach dem Umstülpen, wie in Figur 5c gezeigt, vollständig ausgebreitet werden kann, sodass die zweite Außenlage 13 auf besonders einfache Weise an die erste Außenlage 5 angelegt werden kann. Durch das Umstülpen wird zudem erreicht, dass die erste und zweite Innenlage 9, 15 auf besonders einfache Weise miteinander verbunden werden können, da Positionen, an denen die durchgehenden geschlossenen Verbindungnähte erstellt werden sollen, stets gut und von außen, das heißt außerhalb des Aufnahmevolumens 3, erreichbar sind. Schließlich führt das Umstülpen dazu, dass die zweite durchgehende geschlossene Verbindungsnaht 23 zwischen der ersten Innenlage 9 und der zweiten Innenlage 15 in das zwischen der ersten Innenlage 9 und der zweiten Innenlage 15 ausgebildete Aufnahmevolumen 3 ragt, wie dies in Figur 1 zu erkennen ist.

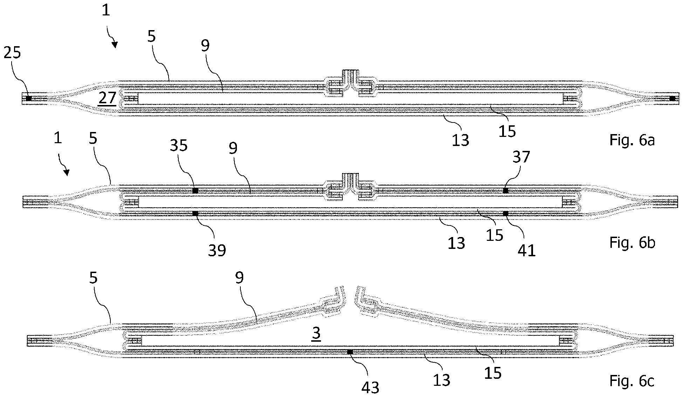

Figur 6a zeigt ein Anlegen der zweiten Außenlage 13 an die erste Außenlage 5, sodass bei diesem Ausführungsbeispiel die Innenfläche 17 der ersten Außenlage 5 der Innenfläche 17 der zweiten Außenlage 13 entlang des Randes der erste Außenlage 5 unmittelbar gegenüber liegt und die erste und die zweite Innenlage 9, 15 von der ersten Außenlage 5 und der zweiten Außenlage 13 umschlossen sind. Ebenfalls gezeigt ist das Erstellen der dritten durchgehenden geschlossenen Verbindungsnaht 25 zwischen der ersten Außenlage 5 und der zweiten Außenlage 13 entlang des Randes der ersten Außenlage 5, sodass die erste Innenlage 9 und die zweite Innenlage 15 von der ersten und der zweite Außenlage 5, 13 eingeschlossen sind. Die zweite Außenlage 13 wird so an die erste Außenlage 5 angelegt, dass die zweite Außenlage 13 und die erste Außenlage 5 vollständig überlappen und die erste und zweite Innenlage 9, 15 einschließen. Dies hat den Vorteil, dass zwischen den Innenlagen 9, 15 und den Außenlagen 5, 13 der Zwischenraum 27 gebildet wird, der mit einem Fluid, vorzugsweise Luft oder Gas, gefüllt werden kann, um dem Schwimmkörper 1 Auftrieb zu verleihen, sodass der Schwimmkörper 1 auf einer Wasseroberfläche schwimmen kann.

Wie in Figur 6b dargestellt werden die vierte Verbindungsnaht 35, die fünfte Verbindungsnaht 37, die sechste Verbindungsnaht 39 und die siebte Verbindungsnaht 41 erstellt. Die Verbindungsnähte 35, 37, 39, 41 sind durchgehende Verbindungsnähte und dienen der Erhöhung der Stabilität des Schwimmkörpers 1. Die Verbindungsnähte 35, 37, 39, 41 werden nacheinander erstellt, wobei alternativ auch denkbar ist, dass die Erstellung der Verbindungsnähte 35, 37, 39, 41, zeitgleich erfolgt. Es kann ebenso vorgesehen sein, dass die vierte Verbindungsnaht 35 und die sechste Verbindungsnaht 39 oder die fünfte Verbindungsnaht 37 und die siebte Verbindungsnaht 41 zeitgleich erstellt werden. Dies ist insbesondere dadurch möglich, dass die jeweiligen Verbindungsnähte 35, und 39 oder 37 und 41 gegenüberliegen, sodass eine Vorrichtung zur Erstellung der Verbindungsnähte von außen an die erste Außenlage 5 und die zweite Außenlage 13 angelegt werden kann.

Zuletzt wird in Figur 6c das Erstellen der achten Verbindungsnaht 43 zwischen der zweiten Außenlage 13 und der zweiten Innenlage 15, wobei die achte Verbindungsnaht 43 der ersten und zweiten Zugangsöffnung 7, 11 und dem Verschlusselement 33 gegenüberliegt und sich entlang von dessen Länge erstreckt. Durch die achte Verbindungnaht 43 wird erreicht, dass die zweite Außenlage 13 und die zweite Innenlage 15 gegenüber der Zugangsöffnung 7, 11 verbunden sind, wodurch sich eine weiter verbesserte Stabilität ergibt.

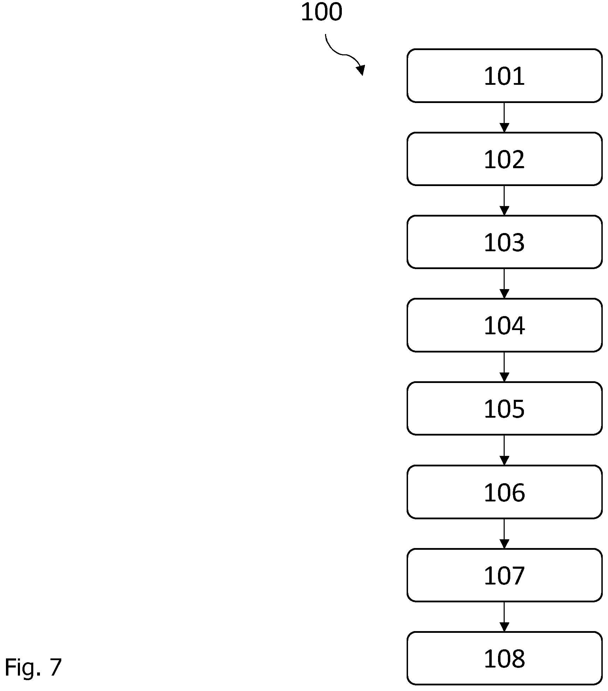

Figur 7 zeigt eine schematische Darstellung einer weiteren Ausführungsform des erfindungsgemäßen Verfahrens. Im Gegensatz zu den Ausführungen zu den Figuren 4a bis 6c zeigt Figur 7 ein Verfahren 100 mit einem ersten Schritt 101, der ein Bereitstellen der ersten Außenlage 5, der ersten Innenlage 9, der zweiten Außenlage 13 und der zweiten Innenlage 15 aufweist. Weiter weist das Verfahren 100 in einem zweiten Schritt 102 das Anlegen der ersten Außenlage 5 an die erste Innenlage 9 auf, sodass in diesem Ausführungsbeispiel die Innenfläche 17 der ersten Außenlage 5 der Innenfläche 17 der ersten Innenlage 9 unmittelbar gegenüber liegt und die erste Zugangsöffnung 7 über der zweiten Zugangsöffnung 11 liegt. In einem dritten Schritt 103 weist das Verfahren 100 das Erstellen der ersten durchgehenden geschlossenen Verbindungsnaht 21 zwischen der ersten Außenlage 5 und der ersten Innenlage 9 um die erste und zweite Zugangsöffnung herum auf. In einem vierten Schritt 104 wird das Anlegen der zweiten Innenlage 15 an die erste Innenlage 13 durchgeführt, sodass in diesem Ausführungsbeispiel die Innenfläche 17 der ersten Innenlage 9 der Innenfläche 17 der zweiten Innenlage 15 entlang des Randes der ersten Innenlage 9 unmittelbar gegenüber liegt. Weiter weist das Verfahren 100 in einem fünften Schritt 105 das Erstellen der zweiten durchgehenden geschlossenen Verbindungsnaht 23 zwischen der ersten Innenlage 9 und der zweiten Innenlage 15 entlang des Randes der ersten Innenlage 9 auf, sodass die erste Außenlage 5 von der ersten Innenlage 9 und der zweiten Innenlage 15 eingeschlossen ist. In einem sechsten Schritt 106 umfasst das Verfahren 100 ein Umstülpen der Anordnung aus erster Außenlage 5, erster Innenlage 9 und zweiter Innenlage 15 durch die erste und zweite Zugangsöffnung 7, 11, sodass die erste Außenlage 5 außerhalb des von der ersten und zweiten Innenlage 9, 15 umschlossenen Bereichs ist. In einem siebten Schritt 107 weist das Verfahren 100 ein Anlegen der zweiten Außenlage 13 an die erste Außenlage 5 auf, sodass bei diesem Ausführungsbeispiel die Innenfläche 17 der ersten Außenlage 5 der Innenfläche 17 der zweiten Außenlage 13 entlang des Randes der erste Außenlage 5 unmittelbar gegenüber liegt und die erste und die zweite Innenlage 9, 15 von der ersten Außenlage 5 und der zweiten Außenlage 13 umschlossen sind. In einem achten Schritt 108 weist das Verfahren 100 ein Erstellen der dritten durchgehenden geschlossenen Verbindungsnaht 25 zwischen der ersten Außenlage 5 und der zweiten Außenlage 13 entlang des Randes der ersten Außenlage 5 auf, sodass die erste Innenlage 9 und die zweite Innenlage 15 von der ersten und der zweite Außenlage 5, 13 eingeschlossen sind.

### Bezugszeichenliste

- 1: Schwimmkörper
- 3: Aufnahmevolumen
- 5: erste Außenlage
- 7: erste Zugangsöffnung
- 9: erste Innenlage
- 11: zweite Zugangsöffnung
- 13: zweite Außenlage
- 15: zweite Innenlage
- 17: Innenfläche
- 19: Außenfläche
- 21: erste Verbindungsnaht
- 23: zweite Verbindungsnaht
- 25: dritte Verbindungsnaht
- 27: Zwischenraum
- 29: erster Seitenabschnitt
- 31: zweiter Seitenabschnitt
- 33: Verschlusselement
- 35: vierte Verbindungsnaht
- 37: fünfte Verbindungnaht
- 39: sechste Verbindungnaht
- 41: siebte Verbindungsnaht
- 43: achte Verbindungsnaht
- 45: neunte Verbindungsnaht
- 47: zehnte Verbindungsnaht
- 49: Zuführungsöffnung
- 51: weitere Zuführungsöffnung
- 53: Überdruckventil

- 100: Verfahren
- 101: erster Schritt
- 102: zweiter Schritt
- 103: dritter Schritt
- 104: vierter Schritt
- 105: fünfter Schritt
- 106: sechster Schritt
- 107: siebter Schritt
- 108: achter Schritt

## Patentansprüche

1. Verfahren (100) zur Herstellung eines Schwimmkörpers (1) mit einem verschließbaren Aufnahmevolumen (3), wobei das Verfahren (100) die folgenden Schritte aufweist:
Bereitstellen
- einer ersten Außenlage (5), die eine erste Zugangsöffnung (7) aufweist,
- einer ersten Innenlage (9), die eine zweite Zugangsöffnung (11) aufweist, wobei deren Größe vorzugsweise der der ersten Zugangsöffnung (7) entspricht,
- einer zweiten Außenlage (13) und
- einer zweiten Innenlage (15),
wobei die erste Außenlage (5), die zweite Außenlage (13), die erste Innenlage (9) und die zweite Innenlage (15) aus einem flächigen Material gebildet sind und eine Innenfläche (17) und eine Außenfläche (19) aufweisen und wobei die Innenfläche (17) des flächigen Materials ein thermoplastisches Material aufweist, **dadurch gekennzeichnet, dass** das Verfahren ferner die folgende Schritte aufweist:
Anlegen der ersten Außenlage (5) an die erste Innenlage (9), sodass die Innenfläche (17) der ersten Außenlage (5) der Innenfläche (17) der ersten Innenlage (9), vorzugsweise unmittelbar, gegenüber liegt und die erste Zugangsöffnung (7) über der zweiten Zugangsöffnung (11) liegt,
Erstellen einer ersten durchgehenden geschlossenen Verbindungsnaht (21) zwischen der ersten Außenlage (5) und der ersten Innenlage (9) um die erste und zweite Zugangsöffnung (7, 11) herum,
Anlegen der zweiten Innenlage (15) an die erste Innenlage (9), sodass die Innenfläche (17) der ersten Innenlage (9) der Innenfläche (17) der zweiten Innenlage (15) entlang des Randes der ersten Innenlage (9), vorzugsweise unmittelbar, gegenüber liegt,
Erstellen einer zweiten durchgehenden geschlossenen Verbindungsnaht (23) zwischen der ersten Innenlage (9) und der zweiten Innenlage (15) entlang des Randes der ersten Innenlage (9), sodass die erste Außenlage (5) von der ersten Innenlage (9) und der zweiten Innenlage (15) eingeschlossen ist,
Umstülpen der Anordnung aus erster Außenlage (5), erster Innenlage (9) und zweiter Innenlage (15) durch die erste und zweite Zugangsöffnung (7, 11), sodass die erste Außenlage (5) außerhalb des von der ersten und zweiten Innenlage (9, 15) umschlossenen Bereichs ist,
Anlegen der zweiten Außenlage (13) an die erste Außenlage (5), sodass die Innenfläche (17) der ersten Außenlage (5) der Innenfläche (17) der zweiten Außenlage (13) entlang des Randes der erste Außenlage (5), vorzugsweise unmittelbar, gegenüber liegt und die erste und die zweite Innenlage (9, 15) von der ersten Außenlage (5) und der zweiten Außenlage (13) umschlossen sind; und
Erstellen einer dritten durchgehenden geschlossenen Verbindungsnaht (25) zwischen der ersten Außenlage (5) und der zweiten Außenlage (13) entlang des Randes der ersten Außenlage (5), sodass die erste Innenlage (9) und die zweite Innenlage (15) von der ersten und der zweite Außenlage (5, 13) eingeschlossen sind.

2. Verfahren (100) nach Anspruch 1, wobei die erste und die zweite Zugangsöffnung (7, 11) linienförmig ausgebildet sind und vorzugsweise die gleiche Länge aufweisen,
wobei die dritte durchgehende geschlossene Verbindungsnaht (25) zwischen der ersten Außenlage (5) und der zweiten Außenlage (13) einen ersten Seitenabschnitt (29) aufweist, der sich auf einer ersten Seite der Zugangsöffnung (7, 11) beabstandet von und entlang dieser erstreckt, und
wobei die dritte durchgehende geschlossene Verbindungsnaht (25) zwischen der ersten Außenlage (5) und der zweiten Außenlage (13) einen zweiten Seitenabschnitt (31) aufweist, der sich auf einer zweiten, der ersten gegenüberliegenden Seite der Zugangsöffnung (7, 11) beabstandet von und entlang dieser erstreckt.

3. Verfahren (100) nach Anspruch 2, wobei nach dem Umstülpen,
zwischen der ersten Außenlage (5) und der ersten Innenlage (9), deren Innenflächen (17) aneinander anliegen, eine vierte Verbindungsnaht (35) zwischen der ersten und zweiten Zugangsöffnung (7, 11) und dem ersten Seitenabschnitt (29) erstellt wird und/oder
wobei nach dem Umstülpen zwischen der ersten Außenlage (5) und der ersten Innenlage (9), deren Innenflächen (17) aneinander anliegen, eine fünfte Verbindungsnaht (37) zwischen der ersten und zweiten Zugangsöffnung (7, 11) und dem zweiten Seitenabschnitt (31) erstellt wird.

4. Verfahren (100) nach Anspruch 2 oder 3, wobei nach dem Anlegen der zweiten Außenlage (13) an die erste Außenlage (5)
zwischen der zweiten Außenlage (13) und der zweiten Innenlage (15), deren Innenflächen (17) aneinander anliegen, eine sechste Verbindungsnaht (39) zwischen der ersten und zweiten Zugangsöffnung (7, 11) und dem ersten Seitenabschnitt (29) erstellt wird, und/oder
wobei nach dem Anlegen der zweiten Außenlage (13) an die erste Außenlage (5) zwischen der zweiten Außenlage (13) und der zweiten Innenlage (15), deren Innenflächen (17) aneinander anliegen, eine siebte Verbindungsnaht (41) zwischen der ersten und zweiten Zugangsöffnung (7, 11) und dem zweiten Seitenabschnitt (31) erstellt wird.

5. Verfahren (100) nach einem oder mehreren der Ansprüche 2 bis 4, wobei nach dem Anlegen der zweiten Außenlage (13) an die erste Außenlage (5)
eine achte Verbindungsnaht (43) zwischen der zweiten Außenlage (13) und der zweiten Innenlage (15) erstellt wird, wobei die achte Verbindungsnaht (43) der ersten und zweiten Zugangsöffnung (7, 11) gegenüberliegt und sich entlang von dessen Länge erstreckt.

6. Verfahren (100) nach einem oder mehreren der Ansprüche 2 bis 5, wobei ein linienförmiges Verschlusselement (33) bereitgestellt wird,
wobei zwischen der Innenfläche (17) des Randes der ersten Zugangsöffnung (7) der ersten Außenlage (5) und dem Verschlusselement (33) eine neunte durchgehende geschlossene Verbindungsnaht (45) gebildet wird und/oder
wobei zwischen der Innenfläche (17) des Randes der zweiten Zugangsöffnung (11) der ersten Innenlage (9) und dem Verschlusselement (33) eine zehnte durchgehende geschlossene Verbindungsnaht (47) gebildet wird.

7. Verfahren (100) nach einem oder mehreren der Ansprüche 1 bis 6, wobei die Außenfläche (19) des flächigen Materials der ersten und der zweiten Innenlage (9, 15) und der ersten und der zweiten Außenlage (5, 13) frei von thermoplastischem Material ist.

8. Verfahren (100) nach einem oder mehreren der Ansprüche 1 bis 7, wobei die erste Innenlage (9) und zweite Innenlage (15) die gleichen Abmessungen haben und/oder
wobei die erste Außenlage (5) und zweite Außenlage (13) die gleichen Abmessungen haben.

9. Schwimmkörper (1) mit einem verschließbaren Aufnahmevolumen (3), mit
- einer ersten Außenlage (5), die eine erste Zugangsöffnung (7) aufweist,
- einer ersten Innenlage (9), die eine zweite Zugangsöffnung (11) aufweist, wobei deren Größe vorzugsweise der der ersten Zugangsöffnung (7) entspricht,
- einer zweiten Außenlage (13) und
- einer zweiten Innenlage (15),
wobei die erste Außenlage (5), die zweite Außenlage (13), die erste Innenlage (9) und die zweite Innenlage (15) aus einem flächigen Material gebildet sind und eine Innenfläche (17) und eine Außenfläche (19) aufweisen und wobei die Innenfläche (17) des flächigen Materials ein thermoplastisches Material aufweist,
**dadurch gekennzeichnet, dass**
eine erste durchgehende geschlossene Verbindungsnaht (21) zwischen der ersten Außenlage (5) und der ersten Innenlage (9) um die erste und die zweite Zugangsöffnung (7, 11) herum vorgesehen ist,
wobei eine zweite durchgehende geschlossene Verbindungsnaht (23) zwischen der ersten Innenlage (9) und der zweiten Innenlage (15) entlang des Randes der ersten Innenlage (9) vorgesehen ist, wobei die zweite durchgehende geschlossene Verbindungsnaht (23) zwischen der ersten Innenlage (9) und der zweiten Innenlage (15) in das zwischen der ersten Innenlage (9) und der zweiten Innenlage (15) ausgebildete Aufnahmevolumen (3) ragt,
wobei die erste und die zweite Innenlage (15) von der ersten Außenlage (5) und der zweiten Außenlage (13) umschlossen sind und eine dritte durchgehende geschlossene Verbindungsnaht (25) zwischen der ersten Außenlage (5) und der zweiten Außenlage (13) entlang des Randes der ersten Außenlage (5) vorgesehen ist, sodass die erste Innenlage (9) und die zweite Innenlage (15) von der ersten und der zweiten Außenlage (13) eingeschlossen sind.

10. Schwimmkörper (1) nach Anspruch 9, wobei die erste und die zweite Zugangsöffnung (7, 11) linienförmig ausgebildet sind und vorzugsweise die gleiche Länge aufweisen,
wobei die dritte durchgehende geschlossene Verbindungsnaht (25) zwischen der ersten Außenlage (5) und der zweiten Außenlage (13) einen ersten Seitenabschnitt (29) aufweist, der sich auf einer ersten Seite der Zugangsöffnung (7, 11) beabstandet von und entlang dieser erstreckt, und
wobei die dritte durchgehenden geschlossene Verbindungsnaht (25) zwischen der ersten Außenlage (5) und der zweiten Außenlage (13) einen zweiten Seitenabschnitt (31) aufweist, der sich auf einer zweiten, der ersten gegenüberliegenden Seite der Zugangsöffnung (7, 11) beabstandet von und entlang dieser erstreckt.

11. Schwimmkörper (1) nach Anspruch 10, wobei zwischen der ersten Außenlage (5) und der ersten Innenlage (9), deren Innenflächen (17) zueinander weisen, eine vierte Verbindungsnaht (35) zwischen der ersten und zweiten Zugangsöffnung (7,11) und dem ersten Seitenabschnitt (29) vorgesehen ist, und/oder
wobei zwischen der ersten Außenlage (5) und der ersten Innenlage (9), deren Innenflächen (17) zueinander weisen, eine fünfte Verbindungsnaht (37) zwischen der ersten und zweiten Zugangsöffnung (7,11) und dem zweiten Seitenabschnitt (31) vorgesehen ist.

12. Schwimmkörper (1) nach Anspruch 10 oder 11, wobei zwischen der zweiten Außenlage (13) und der zweiten Innenlage (15), deren Innenflächen (17) zueinander weisen, eine sechste Verbindungsnaht (39) zwischen der ersten und zweiten Zugangsöffnung (7,11) und dem ersten Seitenabschnitt (29) vorgesehen ist, und/oder
wobei zwischen der zweiten Außenlage (13) und der zweiten Innenlage (15), deren Innenflächen (17) zueinander weisen, eine siebte Verbindungsnaht (41) zwischen der ersten und zweiten Zugangsöffnung (7, 11) und dem zweiten Seitenabschnitt (31) vorgesehen ist.

13. Schwimmkörper (1) nach einem oder mehreren der Ansprüche 10 bis 12, wobei eine achte Verbindungsnaht (43) zwischen der zweiten Außenlage (13) und der zweiten Innenlage (15) vorgesehen ist, wobei die achte Verbindungsnaht (43) der ersten und zweiten Zugangsöffnung (7, 11) gegenüberliegt und sich entlang von dessen Länge erstreckt.

14. Schwimmkörper (1) nach einem oder mehreren der Ansprüche 10 bis 13, wobei ein linienförmiges Verschlusselement (33) vorgesehen ist,
wobei zwischen der Innenfläche (17) des Randes der ersten Zugangsöffnung (7) der ersten Außenlage (5) mit dem Verschlusselement (33) eine neunte durchgehende geschlossene Verbindungsnaht (45) vorgesehen ist und/oder
wobei zwischen der Innenfläche (17) des Randes der zweiten Zugangsöffnung (11) der ersten Innenlage (9) mit dem Verschlusselement (33) eine zehnte durchgehende geschlossene Verbindungsnaht (47) vorgesehen ist.

15. Schwimmkörper (1) nach einem oder mehreren der Ansprüche 9 bis 14, wobei die Außenfläche (19) des flächigen Materials der ersten und der zweiten Innenlage (9, 15) und der ersten und der zweiten Außenlage (5, 13) frei von thermoplastischem Material ist.

16. Schwimmkörper (1) nach einem oder mehreren der Ansprüche 9 bis 15, wobei die erste Innenlage (9) und zweite Innenlage (15) die gleichen Abmessungen haben und/oder
wobei die erste Außenlage (5) und zweite Außenlage (13) die gleichen Abmessungen haben.

17. Schwimmkörper (1) nach einem oder mehreren der Ansprüche 9bis 16, wobei zwischen der ersten Außenlage (5) und der ersten Innenlage (9) und/oder zwischen der zweiten Außenlage (13) und der zweiten Innenlage (15) mindestens ein Zwischenraum (27) gebildet ist, wobei in der ersten oder zweiten Außenlage (13) mindestens eine Zuführungsöffnung (49) angeordnet ist, wobei dem Zwischenraum (27) über die mindestens eine Zuführungsöffnung (49) ein Fluid zugeführt werden kann.

18. Schwimmkörper (1) nach Anspruch 17, wobei die Zuführungsöffnung (49) mit einer Gaskartusche verbunden ist, sodass dem mindestens einen Zwischenraum (27) Gas aus der Gaskartusche zugeführt werden kann.

19. Schwimmkörper (1) nach Anspruch 17 oder 18, wobei in der ersten oder zweiten Außenlage (13) mindestens ein Überdruckventil (53) angeordnet ist, das mit dem mindestens einem Zwischenraum (27) verbunden ist, sodass das Fluid aus dem Zwischenraum (27) herausgefördert werden kann.

## Claims

1. A method (100) for producing a float (1) having a closable receptacle volume (3), the method (100) having the following steps:
providing
- a first outer layer (5), which has a first access opening (7),
- a first inner layer (9), which has a second access opening (11), wherein its size preferably corresponds to that of the first access opening (7),
- a second outer layer (13), and
- a second inner layer (15),
wherein the first outer layer (5), the second outer layer (13), the first inner layer (9) and the second inner layer (15) are formed from a flat material and have an inner face (17) and an outer face (19), and wherein the inner face (17) of the flat material contains a thermoplastic material, **characterised in that** the method also has the following steps:
applying the first outer layer (5) to the first inner layer (9) so that the inner face (17) of the first outer layer (5) is, preferably directly, opposite the inner face (17) of the first inner layer (9), and the first access opening (7) lies over the second access opening (11),
creating a first continuous closed connection seam (21) between the first outer layer (5) and the first inner layer (9) around the first and second access openings (7, 11),
applying the second inner layer (15) to the first inner layer (9) so that the inner face (17) of the first inner layer (9) is, preferably directly, opposite the inner face (17) of the second inner layer (15) along the edge of the first inner layer (9),
creating a second continuous closed connection seam (23) between the first inner layer (9) and the second inner layer (15) along the edge of the first inner layer (9) so that the first outer layer (5) is enclosed by the first inner layer (9) and the second inner layer (15),
turning the arrangement consisting of the first outer layer (5), first inner layer (9) and second inner layer (15) through the first and second access openings (7, 11) so that the first outer layer (5) is outside the region enclosed by the first and second inner layers (9, 15),
applying the second outer layer (13) to the first outer layer (5) so that the inner face (17) of the first outer layer (5) is, preferably directly, opposite the inner face (17) of the second outer layer (13) along the edge of the first outer layer (5), and the first and second inner layers (9, 15) are enclosed by the first outer layer (5) and the second outer layer (13); and
creating a third continuous closed connection seam (25) between the first outer layer (5) and the second outer layer (13) along the edge of the first outer layer (5) so that the first inner layer (9) and the second inner layer (15) are enclosed by the first and second outer layers (5, 13).

2. The method (100) according to Claim 1, wherein the first and second access openings (7, 11) are linear and preferably have the same length,
wherein the third continuous closed connection seam (25) between the first outer layer (5) and the second outer layer (13) has a first side portion (29), which extends along the access opening (7, 11) on a first side thereof and at a distance therefrom, and
wherein the third continuous closed connection seam (25) between the first outer layer (5) and the second outer layer (13) has a second side portion (31), which extends along the access opening (7, 11) on a second side thereof, opposite the first side, and at a distance therefrom.

3. The method (100) according to Claim 2, wherein, after turning through,
a fourth connection seam (35) between the first and second access openings (7, 11) and the first side portion (29) is created between the first outer layer (5) and the first inner layer (9), the inner faces (17) of which bear against one another, and/or
wherein, after turning through, a fifth connection seam (37) between the first and second access openings (7, 11) and the second side portion (31) is created between the first outer layer (5) and the first inner layer (9), the inner faces (17) of which bear against one another.

4. The method (100) according to Claim 2 or 3, wherein, after the application of the second outer layer (13) to the first outer layer (5),
a sixth connection seam (39) between the first and second access openings (7, 11) and the first side portion (29) is created between the second outer layer (13) and the second inner layer (15), the inner faces (17) of which bear against one another, and/or
wherein, after the application of the second outer layer (13) to the first outer layer (5), a seventh connection seam (41) between the first and second access openings (7, 11) and the second side portion (31) is created between the second outer layer (13) and the second inner layer (15), the inner faces (17) of which bear against one another.

5. The method (100) according to one or more of Claims 2 to 4, wherein, after the application of the second outer layer (13) to the first outer layer (5),
an eighth connection seam (43) is created between the second outer layer (13) and the second inner layer (15), wherein the eighth connection seam (43) is opposite the first and second access openings (7, 11) and extends along its length.

6. The method (100) according to one or more of Claims 2 to 5, wherein a linear closure element (33) is provided,
wherein a ninth continuous closed connection seam (45) is formed between the inner face (17) of the edge of the first access opening (7) of the first outer layer (5) and the closure element (33), and/or
wherein a tenth continuous closed connection seam (47) is formed between the inner face (17) of the edge of the second access opening (11) of the first inner layer (9) and the closure element (33).

7. The method (100) according to one or more of Claims 1 to 6, wherein the outer face (19) of the flat material of the first and second inner layers (9, 15) and the first and second outer layers (5, 13) is free of thermoplastic material.

8. The method (100) according to one or more of Claims 1 to 7, wherein the first inner layer (9) and second inner layer (15) have the same dimensions, and/or
wherein the first outer layer (5) and second outer layer (13) have the same dimensions.

9. A float (1) having a closable receptacle volume (3), having
- a first outer layer (5), which has a first access opening (7),
- a first inner layer (9), which has a second access opening (11), wherein its size preferably corresponds to that of the first access opening (7),
- a second outer layer (13), and
- a second inner layer (15),
wherein the first outer layer (5), the second outer layer (13), the first inner layer (9) and the second inner layer (15) are formed from a flat material and have an inner face (17) and an outer face (19), and wherein the inner face (17) of the flat material contains a thermoplastic material,
**characterised in that**
a first continuous closed connection seam (21) is provided between the first outer layer (5) and the first inner layer (9) around the first and second access openings (7, 11),
wherein a second continuous closed connection seam (23) is provided between the first inner layer (9) and the second inner layer (15) along the edge of the first inner layer (9), wherein the second continuous closed connection seam (23) between the first inner layer (9) and the second inner layer (15) protrudes into the receptacle volume (3) formed between the first inner layer (9) and the second inner layer (15),
wherein the first and second inner layers (15) are enclosed by the first outer layer (5) and the second outer layer (13), and a third continuous closed connection seam (25) is provided between the first outer layer (5) and the second outer layer (13) along the edge of the first outer layer (5) so that the first inner layer (9) and the second inner layer (15) are enclosed by the first and second outer layers (13).

10. The float (1) according to Claim 9, wherein the first and second access openings (7, 11) are linear and preferably have the same length,
wherein the third continuous closed connection seam (25) between the first outer layer (5) and the second outer layer (13) has a first side portion (29), which extends along the access opening (7, 11) on a first side thereof and at a distance therefrom, and
wherein the third continuous closed connection seam (25) between the first outer layer (5) and the second outer layer (13) has a second side portion (31), which extends along the access opening (7, 11) on a second side thereof, opposite the first side, and at a distance therefrom.

11. The float (1) according to Claim 10, wherein a fourth connection seam (35) between the first and second access openings (7, 11) and the first side portion (29) is provided between the first outer layer (5) and the first inner layer (9), the inner faces (17) of which face one another, and/or
wherein a fifth connection seam (37) between the first and second access openings (7, 11) and the second side portion (31) is provided between the first outer layer (5) and the first inner layer (9), the inner faces (17) of which face one another.

12. The float (1) according to Claim 10 or 11, wherein a sixth connection seam (39) between the first and second access openings (7, 11) and the first side portion (29) is provided between the second outer layer (13) and the second inner layer (15), the inner faces (17) of which face one another, and/or
wherein a seventh connection seam (41) between the first and second access openings (7, 11) and the second side portion (31) is provided between the second outer layer (13) and the second inner layer (15), the inner faces (17) of which face one another.

13. The float (1) according to one or more of Claims 10 to 12, wherein an eighth connection seam (43) is provided between the second outer layer (13) and the second inner layer (15), wherein the eighth connection seam (43) is opposite the first and second access openings (7, 11) and extends along its length.

14. The float (1) according to one or more of Claims 10 to 13, wherein a linear closure element (33) is provided,
wherein a ninth continuous closed connection seam (45) is provided between the inner face (17) of the edge of the first access opening (7) of the first outer layer (5) with the closure element (33), and/or
wherein a tenth continuous closed connection seam (47) is provided between the inner face (17) of the edge of the second access opening (11) of the first inner layer (9) with the closure element (33).

15. The float (1) according to one or more of Claims 9 to 14, wherein the outer face (19) of the flat material of the first and second inner layers (9, 15) and the first and second outer layers (5, 13) is free of thermoplastic material.

16. The float (1) according to one or more of Claims 9 to 15, wherein the first inner layer (9) and second inner layer (15) have the same dimensions, and/or
wherein the first outer layer (5) and second outer layer (13) have the same dimensions.

17. The float (1) according to one or more of Claims 9 to 16, wherein at least one intermediate space (27) is formed between the first outer layer (5) and the first inner layer (9) and/or between the second outer layer (13) and the second inner layer (15), wherein at least one supply opening (49) is arranged in the first or second outer layer (13), wherein a fluid can be supplied to the intermediate space (27) via the at least one supply opening (49).

18. The float (1) according to Claim 17, wherein the supply opening (49) is connected to a gas cartridge so that gas from the gas cartridge can be supplied to the at least one intermediate space (27).

19. The float (1) according to Claim 17 or 18, wherein at least one pressure relief valve (53) is arranged in the first or second outer layer (13) and is connected to the at least one intermediate space (27) so that the fluid can be conveyed out of the intermediate space (27).

## Revendications

1. Procédé (100), destiné à fabriquer un corps flottant (1), doté d'un volume de réception (3) pouvant se fermer, le procédé (100) comportant les étapes suivantes, consistant à :
mettre à disposition
- une première couche extérieure (5), qui comporte un premier orifice d'accès (7),
- une première couche intérieure (9), qui comporte un deuxième orifice d'accès (11), la taille de celles-ci correspondant de préférence à celle du premier orifice d'accès (7),
- une deuxième couche extérieure (13) et
- une deuxième couche intérieure (15),
la première couche extérieure (5), la deuxième couche extérieure (13), la première couche intérieure (9) et la deuxième couche intérieure (15) étant constituées d'une matière en nappe et comportant une surface intérieure (17) et une surface extérieure (19) et la surface intérieure (17) de la matière en nappe comportant une matière thermoplastique, **caractérisé en ce que** le procédé comporte par ailleurs les étapes suivantes, consistant à :
appliquer la première couche extérieure (5) sur la première couche intérieure (9), de telle sorte que la surface intérieure (17) de la première couche extérieure (5) soit placée de préférence directement au vis-à-vis de la surface intérieure (17) de la première couche intérieure (9) et que le premier orifice d'accès (7) se situe au-dessus du deuxième orifice d'accès (11),
réaliser une première couture de raccordement (21) continue fermée entre la première couche extérieure (5) et la première couche intérieure (9), autour du premier et du deuxième orifices d'accès (7, 11),
appliquer la deuxième couche intérieure (15) sur la première couche intérieure (9), de telle sorte que la surface intérieure (17) de la première couche intérieure (9) soit placée de préférence directement au vis-à-vis de la surface intérieure (17) de la deuxième couche intérieure (15), le long du bord de la première couche intérieure (9),
réaliser une deuxième couture de raccordement (23) continue fermée entre la première couche intérieure (9) et la deuxième couche intérieure (15), le long du bord de la première couche intérieure (9), de telle sorte que la première couche extérieure (5) soit cernée par la première couche intérieure (9) et par la deuxième couche intérieure (15),
retourner l'ensemble constitué de la première couche extérieure (5), de la première couche intérieure (9) et de la deuxième couche intérieure (15) à travers les premier et deuxième orifices d'accès (7, 11), de telle sorte que la première couche extérieure (5) soit à l'extérieur de la zone entourée par la première et la deuxième couches intérieures (9, 15),
appliquer la deuxième couche extérieure (13) sur la première couche extérieure (5), de telle sorte que la surface intérieure (17) de la première couche extérieure (5) soit placée de préférence directement au vis-à-vis de la surface intérieure (17) de la deuxième couche extérieure (13), le long du bord de la première couche extérieure (5) et que la première et la deuxième couches intérieures (9, 15) soient entourées par la première couche extérieure (5) et la deuxième couche extérieure (13) ; et
réaliser une troisième couture de raccordement continue fermée (25) entre la première couche extérieure (5) et la deuxième couche extérieure (13), le long du bord de la première couche extérieure (5), de telle sorte que la première couche intérieure (9) et la deuxième couche intérieure (15) soient cernées par la première et la deuxième couches extérieures (5, 13).

2. Procédé (100) selon la revendication 1, les premier et deuxième orifices d'accès (7, 11) étant conçus sous forme de lignes et ayant de préférence la même longueur,
la troisième couture de raccordement (25) continue fermée comportant entre la première couche extérieure (5) et la deuxième couche extérieure (13) une première portion latérale (29) qui s'étend sur un premier côté de l'orifice d'accès (7, 11), avec un écart par rapport à et le long de celui-ci et
la troisième couture de raccordement (25) continue fermée comportant entre la première couche extérieure (5) et la deuxième couche extérieure (13) une deuxième portion latérale (31), qui s'étend sur un deuxième côté de l'orifice d'accès (7, 11), placé au vis-à-vis du premier, avec un écart par rapport à et le long de celui-ci.

3. Procédé (100) selon la revendication 2, après le retournement,
entre la première couche extérieure (5) et la première couche intérieure (9), les surfaces intérieures (17) de celles-ci étant adjacentes, une quatrième couture de raccordement (35) entre les premier et deuxième orifices d'accès (7, 11) et la première portion latérale (29) étant réalisée et / ou
après le retournement, entre la première couche extérieure (5) et la première couche intérieure (9), les surfaces intérieures (17) de celles-ci étant adjacentes, une cinquième couture de raccordement (37) étant réalisée entre les premier et deuxième orifices d'accès (7, 11) et la deuxième portion latérale (31).

4. Procédé (100) selon la revendication 2 ou 3, après l'application de la deuxième couche extérieure (13) sur la première couche extérieure (5),
entre la deuxième couche extérieure (13) et la deuxième couche intérieure (15), les surfaces intérieures (17) de celles-ci étant adjacentes, une sixième couture de raccordement (39) étant réalisée entre les premier et deuxième orifices d'accès (7, 11) et la première portion latérale (29) et / ou
après l'application de la deuxième couche extérieure (13) sur la première couche extérieure (5), entre la deuxième couche extérieure (13) et la deuxième couche intérieure (15), les surfaces intérieures (17) de celles-ci étant adjacentes, une septième couture de raccordement (41) étant réalisée entre les premier et deuxième orifices d'accès (7, 11) et la deuxième portion latérale (31).

5. Procédé (100) selon l'une quelconque ou plusieurs des revendications 2 à 4, après l'application de la deuxième couche extérieure (13) sur la première couche extérieure (5),
une huitième couture de raccordement (43) étant réalisée entre la deuxième couche extérieure (13) et la deuxième couche intérieure (15), la huitième couture de raccordement (43) étant placée au vis-à-vis des premier et deuxième orifices d'accès (7, 11) et s'étendant le long de la longueur de ceux-ci.

6. Procédé (100) selon l'une quelconque ou plusieurs des revendications 2 à 5, un élément de fermeture (33) en forme de ligne étant mis à disposition,
entre la surface intérieure (17) du bord du premier orifice d'accès (7) de la première couche extérieure (5) et l'élément de fermeture (33) étant constituée une neuvième couture de raccordement (45) continue fermée et / ou
entre la surface intérieure (17) du bord du deuxième orifice d'accès (11) de la première couche intérieure (9) et l'élément de fermeture (33) étant constituée une dixième couture de raccordement (47) continue fermée.

7. Procédé (100) selon l'une quelconque ou plusieurs des revendications 1 à 6, la surface extérieure (19) de la matière en nappe de la première et de la deuxième couches intérieures (9, 15) et de la première et de la deuxième couches extérieures (5, 13) étant exempte d'une matière thermoplastique.

8. Procédé (100) selon l'une quelconque ou plusieurs des revendications 1 à 7, la première couche intérieure (9) et la deuxième couche intérieure (15) ayant les mêmes dimensions et / ou
la première couche extérieure (5) et la deuxième couche extérieure (13) ayant les mêmes dimensions.

9. Corps flottant (1), doté d'un volume de réception (3) pouvant se fermer, doté
- d'une première couche extérieure (5), qui comporte un premier orifice d'accès (7),
- d'une première couche intérieure (9), qui comporte un deuxième orifice d'accès (11), la taille de celles-ci correspondant de préférence à celle du premier orifice d'accès (7),
- d'une deuxième couche extérieure (13) et
- d'une deuxième couche intérieure (15),
la première couche extérieure (5), la deuxième couche extérieure (13), la première couche intérieure (9) et la deuxième couche intérieure (15) étant constituées d'une matière en nappe et comportant une surface intérieure (17) et une surface extérieure (19) et la surface intérieure (17) de la matière en nappe comportant une matière thermoplastique,
**caractérisé en ce qu'**une première couture de raccordement (21) continue fermée est prévue entre la première couche extérieure (5) et la première couche intérieure (9), autour du premier et du deuxième orifices d'accès (7, 11),
une deuxième couture de raccordement (23) continue fermée étant prévue entre la première couche intérieure (9) et la deuxième couche intérieure (15), le long du bord de la première couche intérieure (9), la deuxième couture de raccordement (23) continue fermée entre la première couche intérieure (9) et la deuxième couche intérieure (15) saillant dans le volume de réception (3) conçu entre la première couche intérieure (9) et la deuxième couche intérieure (15),
la première et la deuxième couches intérieures (15) étant entourées par la première couche extérieure (5) et la deuxième couche extérieure (13) et une troisième couture de raccordement (25) continue fermée étant prévue entre la première couche extérieure (5) et la deuxième couche extérieure (13), le long du bord de la première couche extérieure (5), de telle sorte que la première couche intérieure (9) et la deuxième couche intérieure (15) soient cernées par la première et la deuxième couches extérieures (13).

10. Corps flottant (1) selon la revendication 9, les premier et deuxième orifices d'accès (7, 11) étant conçus en forme de ligne et ayant de préférence la même longueur,
la troisième couture de raccordement (25) continue fermée entre la première couche extérieure (5) et la deuxième couche extérieure (13) comportant une première portion latérale (29) qui s'étend sur un premier côté de l'orifice d'accès (7, 11), avec un écart par rapport à et le long de celui-ci et
la troisième couture de raccordement (25) continue fermée entre la première couche extérieure (5) et la deuxième couche extérieure (13) comportant une deuxième portion latérale (31) qui s'étend le long d'un deuxième côté de l'orifice d'accès (7, 11), placé au vis-à-vis du premier, avec un écart par rapport à et le long de celui-ci.

11. Corps flottant (1) selon la revendication 10, entre la première couche extérieure (5) et la première couche intérieure (9), les surfaces intérieures (17) de celles-ci étant orientées l'une vers l'autre, une quatrième couture de raccordement (35) étant prévues entre les premier et deuxième orifices d'accès (7, 11) et la première portion latérale (29) et / ou
entre la première couche extérieure (5) et la première couche intérieure (9), les surfaces intérieures (17) de celles-ci étant orientées l'une vers l'autre, une cinquième couture de raccordement (37) étant prévue entre les premier et deuxième orifices d'accès (7, 11) et la deuxième portion latérale (31).

12. Corps flottant (1) selon la revendication 10 ou 11, entre la deuxième couche extérieure (13) et la deuxième couche intérieure (15), les surfaces intérieures (17) étant orientées l'une vers l'autre, une sixième couture de raccordement (39) étant prévue entre les premier et deuxième orifices d'accès (7, 11) et la première portion latérale (29) et / ou
entre la deuxième couche extérieure (13) et la deuxième couche intérieure (15), les surfaces intérieures (17) de celles-ci étant orientées l'une vers l'autre, une septième couture de raccordement (41) étant prévue entre les premier et deuxième orifices d'accès (7, 11) et la deuxième portion latérale (31).

13. Corps flottant (1) selon l'une quelconque ou plusieurs des revendications 10 à 12, une huitième couture de raccordement (43) étant prévue entre la deuxième couche extérieure (13) et la deuxième couche intérieure (15), la huitième couture de raccordement (43) étant placée au vis-à-vis des premier et deuxième orifices d'accès (7, 11) et s'étendant le long de la longueur de ceux-ci.

14. Corps flottant (1) selon l'une quelconque ou plusieurs des revendications 10 à 13,
un élément de fermeture (33) en forme de ligne étant prévu,
entre la surface intérieure (17) du bord du premier orifice d'accès (7) de la première couche extérieure (5) dotée de l'élément de fermeture (33) étant prévue une neuvième couture de raccordement (45) continue fermée et / ou
entre la surface intérieure (17) du bord du deuxième orifice d'accès (11) de la première couche intérieure (9) dotée de l'élément de fermeture (33) étant prévue une dixième couture de raccordement (47) continue fermée.

15. Corps flottant (1) selon l'une quelconque ou plusieurs des revendications 9 à 14, la surface extérieure (19) de la matière en nappe de la première et de la deuxième couches intérieures (9, 15) et de la première et de la deuxième couches extérieures (5, 13) étant exempte d'une matière thermoplastique.

16. Corps flottant (1) selon l'une quelconque ou plusieurs des revendications 9 à 15, la première couche intérieure (9) et la deuxième couche intérieure (15) ayant les mêmes dimensions et / ou
la première couche extérieure (5) et la deuxième couche extérieure (13) ayant les mêmes dimensions.

17. Corps flottant (1) selon l'une quelconque ou plusieurs des revendications 9 à 16, entre la première couche extérieure (5) et la première couche intérieure (9) et / ou entre la deuxième couche extérieure (13) et la deuxième couche intérieure (15) étant constitué au moins un espace intermédiaire (27), dans la première ou la deuxième couche extérieure (13) étant placé au moins un orifice d'alimentation (49), par l'intermédiaire de l'au moins un orifice d'alimentation (49), un fluide pouvant être alimenté vers l'espace intermédiaire (27).

18. Corps flottant (1) selon la revendication 17, l'orifice d'alimentation (49) étant raccordé sur une cartouche de gaz, de telle sorte que du gaz provenant de la cartouche de gaz puisse être alimenté vers l'au moins un espace intermédiaire (27).

19. Corps flottant (1) selon la revendication 17 ou 18, dans la première ou la deuxième couche extérieure (13) étant placée au moins une soupape de surpression (53), qui est raccordée avec l'au moins un espace intermédiaire (27), de telle sorte que le fluide puisse être évacué hors de l'espace intermédiaire (27).
